# EUROPEAN PATENT SPECIFICATION

(11) **EP 2 713 154 B1**
(45) Date of publication and mention of the grant of the patent: **08.01.2020**
(21) Application number: 12186864.0
(22) Date of filing: 01.10.2012
(51) Int. Cl.: G01N 21/64, G01N 21/01

(54) **Light source module and method for modifying an analytical instrument for analyzing a sample**
Lichtquellenmodul und Verfahren zum Modifizieren eines Analysierinstruments zum Analysieren einer Probe
Module de source de lumière et méthode de modification d'un instrument analytique pour analyse d'un échantillon

(43) Date of publication of application: 02.04.2014
(73) Proprietor: Roche Diagnostics GmbH, 68305 Mannheim (DE); F. Hoffmann-La Roche AG, 4070 Basel (CH)
(72) Inventor: Durrer, Fabian, 6343 Rotkreuz (CH); Furlan, Alan, 6300 Zug (CH); Wietzorrek, Joachim, 6300 Zug (CH)
(74) Representative: Altmann Stößel Dick Patentanwälte PartG mbB

(56) References cited:
- EP-A1- 1 688 734
- WO-A1-03/002959
- WO-A1-2010/134104
- US-A1- 2007 183 931
- US-A1- 2012 080 944
- US-A1- 2012 218 542

## Description

### Field of the invention

The invention relates to a light source module, an analytical instrument, an analytical system and a method for modifying an analytical instrument for analyzing at least one sample. Light source modules and analytical instruments according to the invention may preferably be used in the field of the analysis of biological samples, preferably in the field of in-vitro diagnostics (IVD), for example for analyzing samples of the human body, like blood, urine, saliva, interstitial fluid or other body fluids.

### Related art

In the art of analytics, specifically for analyzing biological samples, analyzers are known operating with intensive but power consuming light sources as e.g. xenon lamps and halogen lamps. Those light sources are not only energy demanding but they also have a rather limited lifetime. The use of light-emitting diodes (in the following also referred to as LEDs) is already known in the analytical field but the available intensity has often not been sufficient. It is in particular challenging to replace the intensive light sources in analytical instruments in the market.

Especially fluorescent measurements require high illumination intensities to provide a sufficient fluorescence output.

Narrowband LEDs, also called single color LEDs, are widespread, just as much as white LEDs. Single color LEDs are sometimes used as single illumination sources and sometimes in assemblies of multiple different LEDs. White LEDs are typically based upon blue LEDs or UV LEDs in connection with a fluorescent dye. In many cases, however, white LEDs aren't true white or sunlight white, since their light is rather a combination of two peaks, in particular blue and yellow. Therefore, fluorophore (e.g. phosphor) development advances quickly in the attempt of getting brighter and whiter LEDs.

In US 5,271,079 a light mixing device with fiber optic output is disclosed. The light mixing device includes multiple light sources supplying light into a mixing rod. The mixing rod mixes the light and supplies it to a plurality of output optical fibers. US 2007/0183931-A1 describes a multi-mode reader, in which a cartridge system is provided. The cartridge has light sources and optical systems and other components that are specific for a certain type of application such as fluorescence, absorbance, or luminescence. The cartridges are removably engaged with the apparatus in a "plug-in" format such that one cartridge may be removed from the apparatus and another cartridge may be easily installed.

Light sources and analytical instruments for analyzing at least one sample as known in the art, however, exhibit some significant disadvantages and shortcomings. For example, light sources in many analytical instruments known in the art have a short life cycle, e.g. shorter than the life cycle of other parts of the analytical instruments and/or of the light sources and spare parts often may not be available any more. Regulatory requirements do not allow hardware changes leading to possibly other specifications of the analyzer or at least a lack of reproducibility of the data obtained. These regulatory requirements and/or regulations require a proof of functionality and reproducibility, which may lead to a significant loss of time and/or costs, and/or which may lead to the necessity of a revision of documents relating to the analyzer. It is necessary that during a lifecycle of a product, e.g. of an analytical instrument, all spare parts and components remain available such that service and repair are continuously possible. Concerning an analytical instrument, e.g. an analytical system, comprising e.g. an illumination module, such a continuous serviceability is given if all components of the system, particularly of the module, are easily available or replaceable by alternative components that work identically. In this case, identical means not only identical with respect to a shape and a size, but also, or even more, identical in respect to their light-emitting and light shaping qualities. This requirement can be considered fulfilling using halogen lamps or even gas discharge lamps, as they have been used in several generations of products over decades. Furthermore, devices and methods known in the art in many cases involve a significant energy consumption and/or generate an unwanted heating of the environment and/or of the sample. Generated heat even may influence biological processes inside the sample and thus may cause wrong results of an analysis.

### Problem to be solved

It is therefore an object of the present invention to provide a light source module, an analytical instrument, an analytical system and a method for modifying an analytical instrument for analyzing at least one sample, which at least partially overcome the shortcomings of instruments known from prior art. Specifically, analytical instruments and light source modules which may be adapted for new types of LEDs as they will become available should be provided, while the light output and an interface to the light source module should remain identical. Furthermore, the light source module should be designed in order to save energy.

### Summary of the invention

This problem is solved by a light source module, and a method for modifying an analytical instrument for analyzing at least one sample, having the features of the independent claims. Preferred embodiments of the invention, which also may be realized in combination with each other, are disclosed in the dependent claims.

As used herein and in the following, the expressions "comprise", "have" or "include" may both refer to an exclusive and a non-exclusive list of components. Thus, the expressions "A comprises B", "A has B" or "A includes B" may both refer to a situation in which A solely consists of B without any other components and to the situation in which A, besides B, comprises one or more further components or constituents.

In a first aspect of the present invention, a light source module for use in an analytical instrument for analyzing at least one sample is disclosed. As used herein, the term light source module generally refers to a device being able to provide light suitable for use in an analytical instrument. Preferably, the light source module may be designed as an exchangeable unit, such that the light source module in the analytical instrument may be replaced by another light source module of the same type or another type. The light source module preferably may be suitable for use in an analytical instrument, which is certified or which should be able to be certified and/or approved according to ISO and FDA regulations.

As used herein, the term analytical instrument refers to a device being able to analyze at least one sample, preferably at least one biological sample. The analytical instrument may be a bio-analytical analyzer and/or an analytical system. Most preferably, the analytical instrument may be an IVD (in-vitro diagnostic) analyzer. The light source module and/or the analytical instrument comprising at least one such light source module may be designed for illumination of at least one sample, preferably for illumination of at least one biological sample. The term "analyzing" may comprise a quantitative and/or a qualitative analysis of the sample and/or an imaging of the sample and/or a detection of at least one analyte in the sample, such as a qualitative and/or a quantitative detection, such as only the detection if an analyte is present in a sample. The analysis may be selected from the group consisting of: an imaging of the sample; a spectroscopy of the sample; an excitation of the sample by light; an analysis of the sample with an arbitrary modification of the sample by light (such as a light-induced modification of the chemical composition of the sample). The sample may be selected from the group consisting of: a biological sample; a medical sample such as a sample of a body tissue of a human or an animal; an artificial sample; an environmental sample; a chemical sample; a mixture of a biological sample with a reagent or any adjuvant substance. However, other types of samples may be used in addition or alternatively. The sample may comprise at least one sample of the human body, like blood and/or urine and/or saliva and/or interstitial fluid and/or other body fluids. The sample may comprise at least one analyte, e.g. at least one biological analyte, preferably several biological analytes.

With increasing quality and quantity, e.g. in respect to a power of light emitted by the LEDs, not only of the white LEDs, they provide a cheap and reliable alternative to almost all formerly known light sources, e.g. also having much longer lifetimes than other light sources such as halogen or xenon light sources. Improvement steps from one generation of LEDs to the next generation are large and fast. LED light sources are often designed as modules including one or more LEDs with primary optics. Primary optics typically comprise one or more lenses, e.g. plastic lenses and/or Fresnel lenses and/or glass lenses, and tapered light guiding rods or flexible waveguides, e.g. fiber bundles or plastic single fibers.

LEDs, especially white LEDs, usually have a rather short lifecycle, e.g. compared to a lifecycle of other parts of analytical instruments. As technology advances, however, current types of LEDs, e.g. white LEDs, may quickly be replaced by new models and therefore may not be commercially available any longer. Specifically, due to the fast development of white light-emitting diodes (white LEDs), such as white LEDs using phosphor compounds, existing LED models are often and after short periods on the market replaced by newer models providing higher power and increased light output. Consequently, previously used models are not being produced any longer, and, therefore, are not available anymore. This short term of availability of specific LED models may lead to problems during the lifecycle specifically of an analytical instrument, e.g. an IVD (in-vitro-diagnostic) analyzer, as the regulatory requirements do not allow hardware changes leading to possibly other specifications of the analyzer or at least a lack of reproducibility of the data obtained. When using LEDs in modern analytical instruments, e.g. medical analyzers and/or instruments, not only the intensity and quality of light needs to fulfill the requirements, it is also necessary to guarantee replacement of e.g. a LED during the instrument's lifecycle. This is a special challenge, as LEDs themselves have very short lifecycles as they are regularly being taken off the market for stronger or brighter or otherwise better successors.

Furthermore, LED light emission as such is generally not focused. LED modules often contain cheap lenses or integrated tapered light guiding rods that shall shape and guide the light to the region of interest. In most cases, this primary optics may not be efficient as it only bundles a certain portion of the light. Furthermore, the quality of the lenses used for such devices known from prior art and the mechanical tolerances of their positions do not fulfill requirements for analytic devices, e.g. analytical instruments. Light guiding rods are standardized in most cases and do not take into account the shape and size of the LED or the requirements of the secondary optics. Sometimes the light guiding rods are placed directly onto a radiation surface of the LEDs. Sometimes a specially designed plastic lens is placed between the LEDs and the rod. Either way, they are usually being chosen wider than the beam's etendue. As the light guiding rods often do not fulfill the optical requirements of a system, e.g. of an analyzing system and/or of an analytical instrument, they often need to be disassembled in order to obtain the LEDs in case the LEDs themselves are not available in their raw form. If a facet of the light guiding rod is too small in respect to a geometrical envelope of a radiating surface of the LED, this causes an obvious coupling loss. If, however, the facet is too large, losses of the same kind have to be taken into account. In many analytical instruments such as optical analyzers, loss of light intensity is observed due to reflections at boundaries of the light guiding rod. If the coordinates of the position space, e.g. on a facet, aren't completely filled with light, segmentation in the angular space of the light will take place. Dark lines building a grid like a multiplication of the facet shape and bright spots in a shape of a radiating surface of the LED between these dark lines will be visible, e.g. in a pupil plane. If an entrance facet of the guiding rod is not completely filled with light, reflections lead to dark stripes and/or dark lines, also called the checkerboard effect. The width of the dark lines tends to zero if the radiating surface ranges to the boundary of the front end facet. This can e.g. be visualized easily by looking into a tapered rod of such a light source as the LED is off and/or by pointing the light source towards a white wall in the distance. Unwanted effects caused by too small or too large facets or bad centering of the light onto the facet, e.g. like the dark lines, are described e.g. in William J. Cassarly, "Recent Advances in Mixing Rods", Proc. of SPIE, Vol. 7103, 710307, 2008.

As white LEDs typically are only quasi-white, their driving current typically has to be adjusted in a way to reach the spectral intensity, or rather the intensity required at a specific wavelength or wavelength range. Depending on the double peak provided by a blue core LED and a LED with phosphor, this can vary very much from model to model, especially if wavelengths from between the two peaks are required.

These phenomena, in known applications, typically limit the usability of LED-based light sources in optical analyzers. For instance, they rarely attain to the intensity provided by halogen lamps over a comparably broad range of wavelengths.

The light source module as disclosed in the present application comprises at least one light-emitting diode (LED) and at least one light guiding rod adapted to guide and shape light emitted by the LED. The at least one LED may be a single LED or may comprise a plurality of LEDs. Thus, the at least one LED may comprise at least one LED array, such as a one-dimensional or two-dimensional LED array.

The light source module may be designed as a replaceable light source module, such that the analytical instrument's light source module may be exchanged by another light source module, e.g. another type of light source module, without irreversibly destroying the light source module and/or the analytical instrument. The light source module may be easily removable, such as by providing one or more appropriate mounting surfaces and/or mounting elements adapted to interact with one or more appropriate mounting surfaces and/or mounting elements of the analytical instrument, in order to allow for a replaceable mounting of the light source module.

The light source module may further be designed in such a way that the light source module may easily be unmounted, e.g. by opening at least one mounting element such as at least one screw and/or latch. The light source module may be designed in such a way, that the light source module may be exchanged without change of the light provided by the light source module.

The light source module and/or the LED may be designed as a spare part and/or may be a spare part. The light source module preferably may be connected to the analytical instrument with one or more reversible connections, such as one or more of the above-mentioned mounting elements provided on the light source module's side and/or on the side of the analytical instrument. Reversible connections may be connections which may be opened and/or closed without destroying the connections, e.g. screws or latches. As an example, one or more force-fit and/or one or more form-fit mounting elements may be used.

The term "light", as used herein, may comprise all types of electromagnetic waves, e.g. visible light and/or ultraviolet (UV) light and/or infrared (IR) light, most preferably visible light. The term "light", as used herein, may be or may comprise all types of light, e.g. coherent light like laser light and/or, preferably, incoherent light.

In addition to the at least one LED, the light source module may comprise one or more additional light sources. Thus, the light source module additionally may comprise at least one laser diode and/or at least one other type of light source.

As used herein, the term light guiding rod generally refers to a device being able to guide light, such as by internal total reflection. Preferably, the light guiding rod may be a device capable of converting the dimensions of the phase space. Most preferably, the light guiding rod may be a device which converts the light emitted by the LED into light with uniform properties, such as one or more of a uniform output, a uniform intensity distribution and a well-defined angular distribution of the light at the output of the rod. The light guiding rod may be able to mix the light emitted by the LED, e.g. in respect to different light components, e.g. different frequency components and/or light with different propagation directions and/or or light emitted by different light sources or light-emitting elements. The light guiding rod may convert light showing a non-uniform mode, e.g. Hermite-Gaussian modes to light with uniform and/or homogenous transverse intensity profile.

Preferably, as discussed above, the light guiding rod may guide the light by multiple total reflections inside the light guiding rod. The light guiding rod may be adapted to shape the light, e.g. by forming the outcoming light by the geometry of the light guiding rod.

The light guiding rod may be made of an arbitrary material adapted to fulfill the above-mentioned light guiding properties. As an example, the light guiding rod may fully or partially be made of an optically transparent material such as one or more of: a glass material, a quartz material, an optically transparent plastic material such as an optically transparent polymer material. Most preferably, the light guiding rod is fully or partially made of a rigid material.

The light guiding rod generally may have an arbitrary geometric shape adapted to fulfill the light guiding properties. The geometry of the light guiding rod preferably may be selected from the group consisting of: a cylinder; a cone; a cube; a prism; a flexible cylinder; a tapered geometry, e.g. the geometry of a frustum. Most preferably the light guiding rod may have a geometry of a frustum with a cubic or rectangular base. The light guiding rod may be designed as mixing rods, e.g. as described in William J. Cassarly, "Recent Advances in Mixing Rods", Proc. of SPIE, Vol. 7103, 710307, 2008.

The light source module further may comprise at least one control unit. The control unit may be a device being adapted to control and/or to drive the light source module and/or the analytical instrument and/or the LED. The control unit may be arranged at least partially separately from the LED. Preferably, the control unit may remain inside the light source module during an exchange of the light source module.

Thus, in an embodiment, the at least one control unit is an integral part of the light source module. As an example, the control unit may be implemented into a housing of the light source module. Thus, when exchanging the light source module, the control unit is exchanged, too. Thus, in this embodiment, when replacing a first light source module of the analytical instrument by a second light source module, a first control unit, forming an integral part of the first light source module, is replaced by a second control unit, forming an integral part of the second light source module. Consequently, in this embodiment, information relating to the light source module is exchanged, too. Thereby, the replacement of the light source module may not affect other parts of the analytical instrument, and, thus, no modifications and/or alterations of other parts of the analytical instrument (or only minor alterations) may be required when the light source module is replaced.

The control unit may comprise at least one computer and/or at least one electrical connector and/or at least one signal connector, preferably at least one electrical line and/or at least one interface, e.g. for connection to parts of the light source module and/or of the analytical instrument. The control unit may comprise e.g. a user interface, wherein the user interface may provide a possibility to control the light source module and/or the LED and/or the analytical instrument by a user and/or by another type of control element such as a computer.

The control unit may comprise or may be connected to at least one user interface such as at least one of a monitor, a keyboard, a touchscreen and a control button, e.g. for controlling the light source module and/or the analytical instrument and/or the LED by the user. The control unit may comprise at least one element selected from the group consisting of: at least one interface; at least one storage unit; at least one electric power supply such as at least one current supply and/or at least one voltage supply; at least one user interface; at least one calculator; at least one computer; at least one software; at least one PID (proportional-integral-derivative) controller; at least one power meter to control the power of the light emitted by the light source module and/or the LED; at least one wave meter, e.g. to control the frequency of the light emitted by the light source module and/or the LED; at least one frequency lock, e.g. to lock the frequency of the light emitted by the light source module and/or the LED, preferably by using at least one spectroscopic method.

The control unit may also be designed to control a plurality of light source modules and/or a plurality of LEDs independent from each other, e.g. to switch several LEDs on or off separately.

The light source module further comprises at least one memory device. In case the light source module comprises the above-mentioned at least one optional control unit, the memory device may be part of the control unit such that the control unit comprises the at least one memory device. Additionally or alternatively, the at least one memory device may be arranged independently from the at least one optional control unit. Thus, the light source module may generally be designed without any control unit having computing capabilities and/or controlling capabilities, such as by designing the light source module as a purely passive device having the at least one memory device only, with the at least one driving parameter set being stored thereon. In this case, preferably, the analytical instrument may access the at least one driving parameter set stored in the at least one memory device of the light source module, such as via at least one interface such as a cable. Thus, at least one optional data processing device of the analytical instrument may access the data stored in the memory device, such as the at least one driving parameter set.

The memory device may have stored thereon data for one or more or all relevant aspects of the at least one LED and/or the light source module. The at least one memory device preferably may comprise at least one electrically programmable memory device and/or may be part of at least one electrically programmable device such as at least one computer, which may be part of an optional control unit of the light source module. The at least one memory device may comprise at least one read-only memory device (ROM) and/or at least one random access memory device (RAM) and/or at least one programmable memory device, such as at least one PROM (programmable read-only memory) and/or at least one EPROM (electronically programmable read-only memory) and/or at least one EEPROM (electronically programmable and erasable read-only memory). The at least one memory device may comprise at least one volatile memory device and/or at least one non-volatile memory device. The memory device as used herein is an electronic storage device which is capable of having stored therein the at least one driving parameter set, such as in a digital format. The memory device may be a purely passive memory device implemented in the at least one light source module. Additionally or alternatively, the memory device may be a part of or may be implemented in at least one computer data storage, such as at least one volatile and/or at least one non-volatile data storage. The computer data storage may be comprised by the optional control unit, which, by itself, may be or may comprise one or more computers and/or may be part of one or more computers or other types of data processing devices. Thus, as outlined above, the at least one memory device might also be a purely passive data storage device, and the light source module might be designed as a passive module, without controlling options of its own. Preferably, in this case as well as in other embodiments, as discussed above, the analytical instrument may comprise at least one data processing device arranged independently from the light source module, which may access data stored in the memory device, such as via at least one interface.

Thus, generally, the analytical instrument may comprise at least one data processing device which, preferably, is designed to act as a controller for the analytical instrument. Thus, the at least one data processing device may be capable of controlling one or more analytical functions of the analytical instrument. As part of these one or more analytical functions of the analytical instrument, the data processing device may also control one or more functions of the light source module. For this purpose, the data processing device may read one or more parameters sets stored in the memory device and may control the light source module in accordance with these parameter sets.

The memory device has stored therein at least one driving parameter set for deriving the LED in such a way that desired emission properties of light provided by the light source module are generated. One or more driving parameter sets may be stored on the memory device.

Additionally to the use of one or more driving parameter sets stored in the memory device , one or more further driving parameter sets may be provided via at least one interface, such as via data transmission from an external device and/or manually, such as by a user manually inserting one or more further driving parameter sets.

The memory device, as outlined above, has stored therein at least one driving parameter set for driving the LED in such a way that desired emission properties of light provided by the light source module are generated. The driving parameter set may be or may comprise e.g. at least one parameter setting and/or at least one driving setting and/or at least one driving set. Preferably, the memory device may store at least one driving parameter set, wherein the driving parameter set may be provided for supporting the LED. At least one driving parameter set may be loaded on the memory device or deleted independently from other driving parameter sets. The memory device may be arranged in such a way that at least one driving parameter set may be loaded and/or stored and/or deleted on or from the memory device independently. The optional control unit and/or the memory device and/or may be able to generate and/or select at least one new driving parameter set out of a plurality of driving parameter sets, e.g. by at least one simulation and/or calculation, e.g. by at least one information from a user.

The driving parameter set, as used herein, may be a set of data, e.g. comprising at least two information units. Each driving parameter set may comprise at least one information about how to drive the at least one LED, e.g. depending on the type of LED and/or depending on the application, e.g. depending on the sample to be analyzed and/or depending on an analyzing method.

Each driving parameter set may provide driving conditions adapted to drive the light source module in such a way that desired emission properties of light provided by the light source module and/or the LED are generated. The driving conditions may comprise information about how to drive the light source module and/or the LED. The driving conditions may comprise at least one quantity selected from the group consisting of: a driving current for the light source module and/or for the LED; a driving voltage for the light source module and/or for the LED; a frequency for the light source module and/or for the LED; a frequency standard for the light source module and/or for the LED; a temperature for the light source module and/or for the LED; a power; a percentage of the total power; an attenuation; a filter; a supply power. The driving conditions e.g. may comprise at least one ramp, e.g. giving a desired frequency evolution and/or power evolution in time of the light emitted by the LED. Each driving parameter set may provide at least one information and/or at least one command and/or at least one instruction for the LED. Additionally or alternatively, the driving parameter set (or in case a plurality of driving parameter sets is provided: at least one driving parameter set of the plurality of driving parameter sets) may control one or more of: a power of the light provided by the light source module; a frequency of the light provided by the light source module; at least one frequency band of the light provided by the light source module; and intensity distribution of the light provided by the light source module as a function of the frequency of the light. Additionally or alternatively, the driving parameter set may comprise at least one timing program to drive the light source module through time segments, which provide light suitable for use in the analytical instrument within the respective time segment. The intensities of the light in the time segments may differ, such that, within predefined frequency bands, the analytical instrument is provided with specific intensities within each time segment. As an example, a first time segment might be provided in which a first predefined intensity is provided within a first frequency band, and at least one second time segment may be provided in which a second predefined intensity is provided within a second frequency band.

The term "desired emission properties", as used herein, may generally refer to one or more predetermined emission properties and/or may refer to selectable emission properties, e.g. selectable by the user, e.g. via the user interface. The desired emission properties may be properties of the light emitted by the LED. The desired emission properties may comprise at least one physical and/or chemical quantity. The desired emission properties may comprise at least one output power and/or at least one output frequency and/or at least one output wavelength and/or at least one beam shape.

The memory device may store, such as by having stored therein, at least two different driving parameter sets for different applications of the light source module. Thus, a high flexibility regarding possible applications of the light source module may be provided and, one and the same light source module may be used for different types of applications.

The memory device having stored therein at least one driving parameter set may both comprise the possibility, that the at least one driving parameter set is already stored in the memory device during a production of the light source module and/or the possibility, that the memory device is loaded with the driving parameter set before a use of the light source module. The driving parameter sets and/or the driving conditions may be adjusted before a use.

The LED, as outlined above and as outlined in further detail below, may consist of one single light-emitting element or may comprise a plurality of light-emitting elements such as an LED array. In case two or more light-emitting elements are comprised, the at least one driving parameter set may comprise at least two driving parameters sets, wherein the driving parameter sets comprise individual driving parameters for the at least two light-emitting elements.

The light source module preferably may comprise at least one white LED and/or at least one LED array. The LED may be or may comprise an inorganic LED. Additionally or alternatively, however, the LED may be or may comprise at least one organic LED. The LED may consist of a chip of a semiconducting material or may comprise at least one chip of a semiconducting material, wherein the semiconducting material may be doped with at least one impurity to create at least one p-n junction. The LED may be able to release energy in the form of at least photon, preferably of light. The LED may comprise at least one flat-surface uncoated semiconductor chip, wherein light may be emitted perpendicular to the surface and a few degrees to a side, e.g. in a cone shape. Alternatively, the LED may be a coated LED, e.g. coated with at least one clear or colored plastic shell and/or at least one primary optical element such as at least one plastic dome or plastic lens.

The white LED may be an individual LED which emits three primary colors, preferably red, green, and blue, wherein all the colors may be mixed to form a white light. The white LED alternatively may be a blue LED and/or a UV LED with at least one light-converting material, such as at least one yellow phosphor. The white LED may be a LED with a broad spectrum, preferably with a broad frequency spectrum, most preferably with a broader frequency spectrum than usual LEDs. Alternatively, the LED may be a monochromatic LED. E.g., the LED may be an organic light-emitting diode (OLED) and/or a Quantum Dot LED. The LED may comprise at least one heat sink for cooling and/or at least one temperature control. The temperature control may comprise at least one heating and/or at least one cooling unit. The LED array may be a set of more than one LED and/or more than one white LED, such as a set of identical or non-identical LEDs arranged in a 1-dimensional or a 2-dimensional pattern, such as in a 1-dimensional or a 2-dimensional matrix. The LED array may further comprise at least one substrate, such as at least one circuit board or integrated circuit, wherein the LEDs are arranged on the at least one substrate and/or are integrated in the at least one substrate. The LED array also may comprise a mixture of at least one LED and at least one white LED. The LED array may comprise LEDs and/or white LEDs with the same color, e.g. for gaining a higher maximal output power. Preferably, the LED array may comprise different LEDs, e.g. differently colored LEDs. Each LED and/or each white LED of an LED array may be controlled separately by the at least one optional control unit and/or by at least one optional data processing device of the analytical instrument, as discussed above. At least two LEDs may be combined to a set of LEDs inside an array, wherein each set of LEDs may be controlled separately by the optional control unit and/or by at least one optional data processing device of the analytical instrument. Most preferably, it may be possible to switch at least one LED and/or at least one set of LEDs on or off separately from the other LEDs and/or from the other sets of LEDs in an LED array. The LEDs and/or the LED sets of an LED array may be arranged in an arbitrary shape and/or in an arbitrary geometrical order. E.g., the LEDs and/or LED sets of an LED array may be arranged in at least one row and/or in at least one at least partially circular arrangement. In the present invention, only specific measuring wavelengths or wavelength bands may be used, e.g. chosen by using at least one filter.

The light source module further may comprise at least one power source adapted to provide electrical power to the LED. The power source may be a device being able to provide the LED and/or other part of the light source module with electrical current and/or electrical voltage. The power source may be a continuous power source and/or a pulsed power source. The power source may comprise at least one pulse-width modulator and/or at least one waveform generator to provide an electrical power variation in time. Alternatively or additionally, the power source may be adapted to provide a constant electrical power to the LED and/or to the light source module. The power source may be adapted to provide electrical power to the LED according to at least one command of the optional control unit and/or according to at least one command of an optional data processing device of the analytical instrument and/or according to at least one driving parameter set. The power source may be connected with the LED by at least one cable and/or by at least one connection.

In one embodiment, the driving parameter set contained in the memory device may contain one driving parameter set for one specific type or model of LED. In another embodiment, the driving parameter set contained in the memory device may contain at least two different driving parameter sets for at least two different types or models of LEDs. The driving parameter sets may comprise at least one driving parameter set per type of LED. The different types of LEDs may deviate from each other in respect to their electrical power needed for the desired emission properties of the light and/or may deviate from each other in respect to different commands needed from the optional control unit and/or from an optional data processing device of the analytical instrument, in order to provide the desired emission properties.

The types of LEDs may comprise different kinds of LEDs, as e.g. different types of LEDs, e.g. differently colored LEDs and/or different LED arrays, e.g. comprising different combinations of LEDs, and/or LEDs comprising different materials and/or different mechanisms of emitting the light.

The emission properties may be selected from the group consisting of: a power of the light provided by the light source module; a frequency and/or a wavelength of the light provided by the light source module; at least one frequency band and/or wavelength band of the light provided by the light source module; a spatial emission characteristic of the light provided by the light source module. The power of the light provided by the light source module may be a total power, e.g. a light intensity, and/or an average power over time. The power of the light may be a total power and/or a power density. The power of the light may be the number of photons emitted by the LED per time unit and/or the total energy of all photons emitted by the LED per time unit, such as per second. The frequency of the light may be a single frequency and/or a frequency spectrum and/or a time evolution of a frequency and/or a time evolution of a frequency spectrum. The frequency band may be at least a part of the frequency spectrum of the light. The spatial emission characteristic may be a characteristic transversal light mode, e.g. a homogenous light cone and/or a Hermite-Gaussian light mode, e.g. a Gaussian beam shape, and/or a longitudinal light mode and/or a collimation of the light and/or a diameter and/or a shape of the light beam and/or a direction of the light beam and/or a coherence, e.g. a longitudinal coherence and/or a transversal coherence of the light.

In one embodiment, the at least one driving parameter set may comprise one driving parameter set adapted for driving the light source module and/or the at least one LED for at one specific analytic application. In an alternative embodiment, the driving parameter sets may comprise at least two different driving parameter sets adapted for driving the light source module and/or the at least one LED for at least two different types of analytic applications. The driving parameter sets may comprise at least one driving parameter set per analytical application, preferably at least one driving parameter set per analytical application and per type of LED. The driving parameter sets may comprise at least one attribution between at least one type of LED and/or at least one application and at least one working parameter and/or at least one driving condition. The driving parameter sets may comprise at least a necessary current and/or a necessary optical wavelength filter for a specific type of LED and/or for a specific type of analytical application. Each driving parameter set may be able to be loaded and/or stored and/or deleted onto or from the memory device, preferably separately. Preferably, the memory device may comprise at least one individual dataset per LED.

In a further embodiment, the optional control unit may control at least one timing program to drive the light source module through time segments. Each time segment may provide an intensity within a frequency band adapted for use of the light source module. This can e.g. be of relevance in case the analytical instrument has one or more filter elements, wherein the timing program synchronizes the emission characteristics of the light source module with the use of one or more of the filter elements used by the analytical instrument. In an embodiment, the filter element comprises at least one light frequency selecting element. The light frequency selecting element preferably may not be part of the light source module itself. Thus, as an example, the at least one optional light frequency selecting element such as the at least one filter (e.g. at least one filter wheel) may be part of the analytical instrument.

As outlined above, the optional control unit preferably may be adapted to control at least one timing program of the light source module. Thus, the optional control unit may be adapted to control a timing program with a plurality of time segments, wherein emission properties of the light source module in at least one first time segment are different from the emission properties of the light source module in at least one second time segment.

As further outlined above, the LED may comprise one or more light-emitting elements. As an example, the at least one LED may comprise one, two or more light-emitting elements such as one, two or more LEDs. As an example, a plurality of LEDs may be provided, such as an LED array. In case a plurality of light-emitting elements is provided, the light-emitting elements may have identical or different emission characteristics and/or properties, such as the same color and/or different colors of emission.

In case the at least one LED comprises a plurality of light-emitting elements, the optional control unit and/or an optional data processing device of the analytical instrument preferably may be adapted to control at least one timing program wherein, during the time segments of timing program, the light-emitting elements are driven in different ways. Thus, the control unit and/or the optional data processing device of the analytical instrument may be adapted to control a timing program to activate two or more light-emitting elements of the at least one LED, wherein the two or more light-emitting elements emit light of different frequencies. Thus, as an example, by using an appropriate timing program and by using a plurality of light-emitting elements, wherein, during at least one first time segment of the timing program the emission frequency or the emission band of the light emitted by the light source module differs from an emission frequency or an emission band of the light emitted by the light source module during at least one second time segment.

The optional control unit and/or the memory device preferably may comprise at least one EEPROM (electrically erasable programmable read-only memory). Preferably, the optional control unit and/or the memory device may comprise at least one EEPROM on a PCB (printed circuit board), e.g. of the LED, preferably on an LED module. The EEPROM preferably may be a memory being able to save the driving parameter sets even when power is removed.

The light guiding rod may comprise one of a tapered light guiding rod and a linear light guiding rod. The tapered light guiding rod may be a light guiding rod which becomes conically wider towards a back end of the guiding rod, e.g. towards an outlet facet. Preferably, the tapered light guiding rod may have the geometry of a frustum with a cubic, most preferably with a rectangular base. A rectangular base of the light guiding rod facing to the LED may have a smaller surface than a rectangular base of the light guiding rod facing to secondary optics and/or to the sample. Alternatively, a rectangular base of the light guiding rod facing to the LED may have a larger surface than a rectangular base of the light guiding rod facing to secondary optics and/or to the sample. An aspect ratio of both bases may stay constant, alternatively the aspect ratio may be different between both bases. The tapered light guiding rod may change a spatial emission characteristic of the light and/or a diameter of the light. The linear light guiding rod may be a light guiding rod having the geometry of a cylinder and/or of a rectangular cuboid, preferably with bases having the same geometry and/or the same area. The light guiding rod in principle may have an arbitrary geometry. The light guiding rod may have the geometry of a prism, e.g. of a uniform prism, or of a cylinder, e.g. of a right circular cylinder or of an elliptic cylinder or of a cone. At least a part of the light guiding rod may comprise ripples, e.g. longitudinal and/or transverse structures on at least one surface and/or at least a part of the light guiding rod may have a rough surface.

The light guiding rod may comprise at least one front end. As used herein, the term front end generally may refer to the side of the guiding rod facing towards the at least one LED. The light guiding rod may also be modular and/or exchangeable, similar to the LED. The front end may be or may provide the entry of the light guiding rod. Most preferably, the front end may be the part of the light guiding rod where the light emitted by the LED enters the light guiding rod.

The front end comprises at least one entrance facet. The entrance facet may be a ground facet. The entrance facet may be perpendicular to a main propagation direction of the light emitted by the LED. The entrance facet alternatively may comprise at least one surface having an angle to the main propagation direction of the light-emitting by the LED. The entrance facet may have a flat surface for preventing diffusion or may have a rough surface for supporting diffusion of the light.

The geometry of the entrance facet fits to the geometry of a surface area of a light-emitting surface of the at least one LED. Thus, in case the LED consists of a single light-emitting element, the entrance facet may fit to the geometry of the light-emitting surface of the single light-emitting element. In case the LED comprises a plurality of light-emitting elements, such as an LED array, the entrance facet preferably may fit to the geometry of the surface area of the light-emitting surface of the plurality of LEDs, such as the light-emitting surface of the LED array. The entrance facet preferably may have a surface area which is in the range from -10% to +10% of the surface area of the light-emitting surface of the light-emitting diode.

The light guiding rod may comprise a back end facing away from the LED. The back end preferably may comprise an exit facet. In a preferred embodiment, the exit facet may comprise at least one scattering surface.

Generally, the exit facet may be adapted to the specific use of the light source module. Thus, as an example, the exit facet may have a geometry which fits an entrance window of the analytical element. Generally, a geometry and/or an area of the exit facet may match a light entrance window of the analytical instrument. This light entrance window may simply comprise an opening and/or another type of interface allowing for an entry of the light emitted by the at least one light source module.

Further preferred embodiments of the present invention may refer to the geometrical properties of the light emitted by the LED. As outlined above, the geometry of the entrance facet may comprise a suitable size of the entrance facet and/or suitable shape of the entrance facet and/or suitable alignment of the entrance facet and/or suitable orientation of the entrance facet in respect to a main direction of the light emitted by the LED. The geometry of the entrance facet may fit to the geometrical properties of the light emitted by the LED as accurately as possible. A geometrical overlap between a surface of the entrance facet may fit as accurately as possible to the spatial emission characteristic of the light, e.g. to a diameter of the light. A diameter of the light and/or the light cone may fit as accurately as possible to boundaries of the entrance facet. The LED or the LED array, preferably at least one emission surface of the LED or the LED array, may range to the boundaries of the entrance facet. The geometry of the entrance facet may fit as accurately as possible to the geometrical properties of the light emitted by the LED in respect to a positioning and/or to an angle and/or to a collimation of the light. The geometry of the entrance facet preferably may fit to a geometrical envelope of a radiating surface of the LED. A surface of the entrance facet may overlap with a cross section of the light emitted by the LED with a discrepancy of not more than ±50 %, preferably not more than ± 10 %, most preferably not more than 0 % of the surface of the entrance facet. An axis of the light, e.g. in parallel with a main propagation direction of the light, e.g. of the k-vector of the light, may be in parallel with an axis, e.g. a symmetry axis, of the light guiding rod with a discrepancy of less than ± 30°, preferably less than ± 10°, most preferably less than ± 1°. A center of the light emitted by the LED may deviate from the center of the entrance facet by not more than ±50 %, preferably not more than ± 10 %, most preferably not more than 0 % of the diameter of the cross section of the light emitted by the LED. The geometry of the entrance facet may fit to the geometrical properties of the one or more LEDs in such a way that loss of intensity of the light may be minimized while the spatial emission characteristic of the light out of the light guiding rod may be as homogenous as possible, preferably without showing a checkerboard effect. The center of the light emitted by the LED and/or the center of the entrance facet may be defined as a geometrical center and/or as a center of symmetry and/or as a center of mass of a disc having a surface respecting to the cross section of the light emitted by the LED or of the surface of the entrance facet, respectively. Most preferably, the geometry of the entrance facet may fit to the geometrical properties of the light emitted by the LED in such a way that the etendue of the light may be preserved. The etendue may be a property of the light which may characterize how spread out the light is in area and/or in angle. The etendue may describe a volume in phase space of the light.

The light guiding rod may comprise at least one back end. The back end may be the exit of the light guiding rod, e.g. for the light. The light guiding rod may comprise at least one type of glass, preferably two types of glass with different indices of refraction, e.g. for providing light guiding by total reflection inside the light guiding rod. The entrance facet and/or the exit facet may comprise at least one coating, e.g. at least one anti-reflective coating. The back end may be a surface of the light guiding rod where the light exits from the light guiding rod. The back end may comprise at least one exit facet. The exit facet may be a ground facet. The exit facet may be parallel to the entrance facet. The term "parallel", as used herein, may comprise an angle smaller than 10°, e.g. smaller than 5° and most preferably an angle smaller than 2°, wherein the angle is measured as an angle between surface normal of the exit facet and the entrance facet. Alternatively, the exit facet may be oriented under an angle to the entrance facet. The exit facet may comprise at least one scattering surface. The scattering surface may be a surface changing the spatial emission characteristic of the light. The scattering surface may comprise at least one sandblasted surface and/or at least one holographic grating and/or at least one scattering particle, preferably scattering particles, and/or at least one diffuser. Alternatively to the scattering surface being comprised by the exit facet, the scattering surface may be arranged separately from the exit facet, e.g. inside the light guiding rod and/or in front of the light guiding rod and/or behind the light guiding rod, in respective to the direction of the propagation of the light. The scattering surface may be a tool to smoothen the spatial emission characteristic of the light, e.g. to make the light more homogeneous over the cross section of the light, e.g. in respect to a spatial intensity distribution and/or a spatial frequency distribution.

The light source module itself preferably may have a modular setup. Consequently, the light source module may comprise a plurality of components or modules which may be connected to interact as the light source module. Thus, the light source module comprises the at least one LED. Besides, the light source module may comprise one or more further modules which may be attached directly or indirectly to the LED, in a reversible or an irreversible way. Thus, the light source module preferably comprises two or more modules which may be combined to interact to provide the functions of the light source module.

As an example, the light source module may further comprise a guiding module comprising at least one rod housing and the at least one guiding rod. The light guiding rod may be fixed inside the rod housing, wherein the rod housing may comprise at least two openings. Thus, a first opening may be provided, for coupling the light emitted by the LED into the light guiding rod. Further, a second opening may be provided, for coupling the light exiting the light guiding rod out of the guiding module.

Further, the light source module may comprise at least one basis module. The basis module may be adapted to provide support for the at least one LED and/or the at least one optional guiding module. As an example, the LED may be attached to the basis module, e.g. in a permanent manner or in an exchangeable way. Further, optionally, the at least one guiding module may be attached to the basis module, such as by at least one connection element, preferably at least one connection element adapted to provide a form-fit and/or a force-fit connection. As an example, the at least one guiding module may be attached to the at least one basis module by at least one screw connector.

Preferably, the at least one guiding module may be attached to the at least one basis module and/or the at least one LED in an adjustable way, in order to allow for an alignment of the at least one LED relative to the at least one guiding module. Thus, the at least one connection element may provide a certain adjustability, in order to allow for an alignment of the LED to the at least one guiding module and/or vice versa. As an example, the at least one connection element may provide mechanical tolerances, such as by using screw holes being wider than a diameter of screws, such that, after alignment and/or positioning, the LED and the at least one guiding module may be fixed relative to one another in more than one position. Thereby, dark lines, checkerboard effects or other optical artifacts may be avoided by properly aligning the modules of the light source module relative to each other.

Additionally or alternatively to the option of providing adjustability via the at least one connection element, the guiding module and/or the at least one LED and/or the at least one basis module may provide at least one adjustment element. As an example, the at least one light guiding rod may be arranged inside a rod housing in an adjustable way. Thus, at least one position and/or at least one orientation of the light guiding rod may be adjusted. As an example, the rod housing may comprise two or more components which may be adjusted relative to one another, such as by implementing the light guiding rod into an adjustment tube which may be rotated and/or shifted, in order to adjust a position of the light guiding rod relative to the at least one LED. Additionally or alternatively, other adjustment options may be provided. Again, additionally or alternatively, one or more optical elements may be provided in between the light guiding rod and the at least one LED, such as at least one lens. The at least one optional optical element may be comprised inside the guiding module and/or in another module of the light source module.

In a preferred embodiment, the at least one LED is embedded in between the at least one guiding module and the at least one basis module. Thus, generally, the light source module may comprise at least one source housing which fully or partially surrounds the at least one LED. In a preferred embodiment, the at least one source housing at least partially is formed by a housing of the guiding module and the basis module.

In case at least one basis module is provided and/or in other embodiments, the modular light source module preferably may further comprise at least one heat sink. Thus, at least one heat sink may be provided, which, preferably, may directly or indirectly dissipate heat generated by the at least one LED. The at least one heat sink may also be part of other components, such as part of the at least one optional basis module. Thus, as an example, the at least one basis module may comprise at least one heat sink with a plurality of heat sink ribs, wherein the at least one LED is thermally connected to the basis module, in order to allow for the heat sink ribs to dissipate heat generated by the at least one LED and/or by other components of the light source module such as one or more other electrical components, e.g. the optional control unit and/or a power supply. As an example, the plurality of heat sink ribs may be located on a rear side of the basis module pointing away from the at least one guiding module and/or pointing away from the sample to be analyzed.

The light source module may further comprise at least one interface and/or at least one connector, wherein the at least one interface and/or the at least one connector may be adapted to provide electrical power to the light source module, specifically to the at least one LED. Additionally or alternatively, the at least one interface and/or the at least one connector may be adapted for an exchange of data and/or commands, wherein a unidirectional and/or a bidirectional exchange of data and/or commands is feasible. Thus, as an example, the at least one cable connector and/or at least one electrical plug may be provided, which preferably may be a standardized cable connector, for electrical interaction of the light source module with at least one other component of an analytical instrument making use of the light source module. Additionally or alternatively, the at least one optional control unit and/or the at least one optional power source may be located separately from the modular setup, and the at least one LED may be connected to the at least one optional control unit and/or the at least one power source via the at least one cable. Again, alternatively, as discussed above, the light source module may be designed without any active control capabilities. Thus, preferably, an optional data processing device of the analytical instrument may take over one or more control functions for the light source module and may directly or indirectly control the light source module, such as directly via at least one interface and/or indirectly via at least one power source. The optional data processing device of the analytical instrument preferably may be adapted to read the at least one parameter set from the memory device of the light source module in order to provide appropriate control functions, such as appropriate commands for driving the light source module in order to have the light source module generate light with the desired emission properties.

In a further embodiment of the present invention, an analytical instrument for analyzing at least one sample is disclosed. The sample may be the sample as disclosed above. The analytical instrument comprises at least one light source module as described above or as described in further detail below. The analytical instrument has at least one entrance window for light generated by the light source module. The entrance window generally may be or may comprise an arbitrary opening, such as an opening in at least one housing of the analytical instrument, allowing for an entry of light emitted by the light source module into a beam path of the analytical instrument. The analytical instrument is adapted to direct light emitted by the light source module onto the at least one sample. As used herein, the term "direct light at" generally refers to the fact that the analytical instrument is adapted to expose the sample to the light emitted by the at least one light source module. As an example, the at least one entrance window may allow for an entry of the light emitted by the light source module into at least one straight or folded beam path inside a housing of the analytical instrument, the beam path being adapted to directly or indirectly guide the light emitted by the light source module in such a way that the light reaches the sample.

In an embodiment, the analytical instrument may comprise one or more mounting elements and/or positioning elements, allowing for a precise optical alignment of the light source module with respect to remaining components of the analytical instrument, such as with respect to one or more beam paths of the analytical instrument.

The analytical instrument further may comprise at least one secondary optics for shaping the light emitted by the light source module, preferably at least one telescope. The secondary optics may be a device comprising optics, wherein the device is designed to be passed by the light emitted by the light source module. The secondary optics may comprise at least one optical element. The secondary optics may comprise an optical element selected from the group consisting of: at least one lens; at least one diaphragm; at least one field stop; at least one iris; at least one beam splitter; at least one mirror; at least one filter; at least one camera; at least one prism; at least one glass plate; at least one beam absorber; at least one AOM (acousto-optic modulator); at least one electro-optic modulator; at least one cavity; at least one microscope; at least one spectroscopy cell. The term "for shaping the light" may refer to changes of the spatial emission character of the light and/or to changes of the propagation direction and/or to changes of the collimation of the light and/or to changes of the intensity of the light and/or to changes of the spectrum of the light and/or to changes of the polarization of the light. The shaping may refer to a shaping in phase space and/or in real space and/or in frequency space. The telescope may be a device being able to change the cross section of the light, preferably of the light beam. The telescope may comprise at least two lenses, wherein the focal length of the lenses may be different. The distance between the two lenses preferably may be dependent on the focal length s of the lenses. The telescope additionally may comprise at least one iris and/or at least one pupil. The telescope may be a device being able to change the diameter of the light beam.

The secondary optics may further comprise at least one scanning element and/or positioning element, which may be adapted to select or adjust a position of a light spot on the sample and/or to scan a light spot over the sample. Thus, at least one scanning mirror may be used, which may be controlled by a data processing device of the analytical instrument.

The secondary optics may further be adapted to at least partially correct for imperfections of the light source module and/or other optical components of the analytical instrument. Thus, generally, an exit facet of the light guiding rod may be a component which may be susceptible to imperfections. The secondary optics may be adapted to correct for these imperfections and/or to diminish the impact of these imperfections onto the analytical measurement. As an example, the secondary optics may comprise one or more components adapted to voluntarily defocus the light emitted by the light source module, such as by at least one lens and/or by at least one field stop and/or at least one diaphragm. By using this voluntary defocussing, the imperfections may be "smeared out", and the impact of these imperfections may be minimized.

The light guiding rod may comprise at least one back end, e.g. a back end as described above. The back end may fit onto the secondary optics, which may at least partially be part of the analytical instrument and which preferably remains unaltered when the light source module is exchanged. The back end may fit onto the secondary optics in respect to optical requirements, e.g. in respect to a required beam shape. The back end preferably also fits mechanically onto the secondary optics. The back end preferably fits to the secondary optics and to the application of the analytical instrument, e.g. to at least one spectroscopy and/or to at least one imaging and/or to at least one microscopy. The secondary optics may comprise the sample and/or may be able to hold the sample. The secondary optics may comprise at least one sample holder for holding the sample.

The analytical instrument further may comprise at least one light detector adapted to receive light. The light may be selected from: light emitted by the sample (such as fluorescence and/or phosphorescence light, e.g. for fluorometric measurements), light reflected by the sample (such as light emitted by the at least one light source module and reflected by the sample in a directed way), light transmitted through the sample (such as for the purpose of an absorption measurement) and light emitted by the light source module itself (such as a reference light beam).

The analytical instrument may provide at least one beam path which may be adapted to guide light from the sample and/or from the light source module to the at least one light detector. As an example, the analytical instrument may provide a beam path setup allowing for detecting light reflected by the at least one sample with the light detector. This measurement setup may also be referred to as a reflective setup, a reflection setup and/or a remission setup. Additionally or alternatively, the analytical instrument may provide a beam path setup allowing for detecting light transmitted through the at least one sample with the light detector. The latter measurement setup may also be referred to as a transmissive setup and/or an absorption setup and preferably allows for measurements of absorption properties of the sample and/or the analyte. Both setups may also be combined. Further, alternative or additional setups may be present.

The light detector preferably may be a device being able to detect at least one photon of the light emitted by the light source module and/or emitted by the sample. The light detector e.g. may be a light detector unit. The light detector may comprise e.g. at least one device being able to detect at least a part of the light, e.g. at least one photon, with spatial resolution and/or with time resolution. The light detector may comprise at least one device being selected from the group consisting of: a camera, e.g. at least one video camera and/or at least one image sensor and/or at least one CCD (charge-coupled device) image sensor; at least one photodiode, e.g. at least one avalanche diode; at least one photographic plate.

An example of an analytical instrument which may be modified according to the present invention, by using at least one light source module according to the present invention, may be found in US 7,498,164 B2. In this document, an instrument is disclosed which can monitor nucleic acid sequence amplifications reactions. The instrument includes a multi-notch filter disposed along one or both of an excitation beam path and an emission beam path. Inter alia, the use of light sources having a light-emitting diode is disclosed, such as an organic light-emitting diode. Specifically, fluorescence measurements may be performed.

The analytical instrument further may comprise at least one filter element, e.g. at least one filter unit. The filter element generally may be or may comprise an arbitrary device capable of changing the spectral properties of the light and/or changing an intensity of the light, such as by decreasing an intensity of the light. Thus, as an example, the at least one filter element may be or may comprise at least one gray filter. The filter element preferably may be an optical filter being able to selectively transmit light of different wavelengths. The filter may remove at least one part of the light, e.g. at least one frequency component of the light and/or at least a part of the intensity of the light, e.g. homogeneous over a cross section of the light or inhomogeneous over the cross section of the light. The at least one filter element may fully or partially be part of the at least one light source module and/or another part of the analytical instrument. Alternatively or additionally, the LED itself may comprise at least one filter unit and/or at least one LED array comprising differently colored LEDs.

The analytical instrument may optionally comprise at least one further element selected from the group consisting of: at least one data processing device, e.g. for data evaluation, preferably for evaluation of the light received by the light detector; at least one analyte, e.g. at least as a part of the sample; at least one housing; at least one heat sink.

The analytical instrument may further comprise at least one power source for providing electrical power to the light source module. The at least one power source may comprise at least one internal energy storage such as at least one of a battery, an accumulator and a capacitor. Additionally or alternatively, the at least one power source may comprise at least one external power supply, such as at least one power plug, for providing external electrical energy to the analytical instrument and, preferably, to the at least one light source module.

The at least one optional power source preferably may be adapted to receive information from the light source module and/or may be controlled by the light source module. Thus, as an example, the at least one driving parameter set stored in the memory device of the light source module may comprise one or more parameters for driving the at least one power source. As outlined above, this at least one parameter may comprise one or more of a power, a voltage and a current to be supplied to the at least one LED. This at least one parameter may directly or indirectly be provided to the at least one power source. Thus, the optional control unit may be adapted to directly drive the at least one power source. Additionally or alternatively, as outlined above, the analytical instrument may comprise at least data processing device which may function as an instrument control unit. In the latter case, the data processing device of the analytical instrument may be adapted to retrieve at least one parameter from the memory device of the light source module and to drive the at least one power source according to this parameter. Thus, generally and optionally, the at least one optional power source may be adapted to retrieve information and/or commands directly or indirectly from the at least one light source module, the information relating to an operation of the power source, such as to an electrical power needed for driving the light source module, in order to achieve desired emission properties of the light provided by the light source module.

Further preferred embodiments may refer to an interaction between the at least one light source module and one or more remaining parts of the analytical instrument. Thus, as outlined above, the analytical instrument may comprise at least one data processing device adapted to interact with the at least one light source module, preferably the at least one optional control unit of the light source module and/or with the at least one memory device, such as via one or more interfaces. The analytical instrument and the light source module may be connected via at least one interface adapted for unidirectional or bidirectional exchange of information and/or instructions, such as between the data processing device and the optional control unit and/or the memory device.

Thus typically, this interaction may take place during or after replacement of one light source module by another light source module, such as during or after replacement of a first light source module by a second light source module in the analytical instrument. Therein, as an example, the following scenarios may be realized in isolation or in combination:
A) No communication between the light source module and the analytical instrument takes place. In this case, preferably, the second light source module which is intended to replace a first light source module mimics the first light source module, specifically with regard to emission characteristics such as spectral emission properties and/or geometrical properties of the light emitted by the light source module.
B) A timing program is being used, such as by the data processing device of the analytical instrument and/or the optional control unit of the light source module. This timing program may comprise one or more time segments, also referred to as phases or steps, which may be implemented in a continuous or stepwise fashion, wherein, in one or more of the time segments, the emission characteristics of the second light source module intended for replacement of the first light source module corresponds to the emission characteristics of the first light source module.
C) The analytical instrument and the light source module may be connected via at least one interface adapted for unidirectional or bidirectional exchange of information and/or instructions. As an example, the analytical instrument, such as the data processing device of the analytical instrument, may be adapted to read the at least one parameter set (or in case a plurality of parameter sets is provided: at least one of the parameter sets) from the memory device of the light source module. As an example, an appropriate parameter set may be read, which is adapted to a specific purpose such as a specific application and/or measurement.
D) Again, the analytical instrument and the light source module may be connected via at least one interface adapted for unidirectional or bidirectional exchange of information and/or instructions. The analytical instrument may provide one or more boundary conditions to the light source module, and the light source module, specifically the control unit and/or the memory device of the light source module, may be adapted to provide a parameter set adapted to generate a light output having emission properties according to these boundary conditions. As an example, the analytical instrument may provide a desired intensity distribution, and the control unit and/or the memory device may provide one or more parameter sets adapted to generate this intensity distribution, such as by choosing appropriate parameters from a lookup table and/or another type of data base. This at least one parameter set adapted to generate the desired intensity distribution may be used by the optional control unit itself in order to drive the LED appropriately and/or may be provided to the data processing device of the analytical instrument.

Additionally or alternatively, other embodiments are feasible.

The analytical instrument may be arranged such that it comprises at least one beam path. The at least one light source module and/or the at least one LED may be arranged at a starting point of the beam path followed by the light guiding rod, e.g. in respect to the propagation direction of the light, preferably in respect to a mean propagation direction, wherein the light guiding rod may be followed by the secondary optics, wherein at least one sample may be arrangeable behind the light guiding rod and/or behind the secondary optics. Thus, the analytical instrument may comprise at least one sample holder adapted to hold and/or position the at least one sample, such as at a specific location within the at least one beam path. As an example, the at least one sample holder may comprise at least one slide holder and/or at least one cuvette. Additionally or alternatively, other types of sample holders may be used. The light source module and/or the analytical instrument may comprise at least one processing unit, e.g. at least one data processing device.

In a further embodiment of the present invention, an analytical system is disclosed. The analytical system comprises at least one analytical instrument as disclosed above or as disclosed in further detail below. The analytical system comprises at least one first light source module and at least one second light source module. As used in the context of the analytical system, the term light source module generally refers to a module capable of providing light to the analytical instrument, such as to at least one beam path of the analytical instrument. The first light source module and the second light source module may be part of the analytical instrument and/or may be used in the analytical instrument.

Therein, the at least one second light source module is a light source module having at least one LED. This type of second light source module is also referred to as a light source module with an LED. This second light source module preferably may be embodied as outlined above or as outlined in further detail below, as a light source module according to the present invention. However, other types of second light source modules having at least one LED are feasible.

Contrarily, the at least one first light source module is a light source module having at least one light source being different from an LED. Thus, the at least one first light source module comprises at least one non-LED light source, such as at least one light source selected from the group consisting of: a fluorescent lamp, an incandescent lamp, a light bulb, a discharge lamp such as a gas discharge lamp. Additionally or alternatively, other non-LED light sources may be used. These first light source modules are of the type which typically is implemented in today's analytical instruments and which should be replaced by at least one light source module according to the present invention.

The analytical system is designed such that the light characteristics, such as the emission properties, of the second light source module mimic the light characteristics of the first light source module, such as the emission properties of the first light source module.

In other words, preferably, the analytical system comprises at least two light source modules, wherein a first light source module is of a non-LED type and a second light source module is of an LED type, wherein the at least two light source modules preferably are exchangeably usable in the analytical instrument without altering the emission properties of the light provided by the respective light source module to the analytical instrument.

Preferably, both light source modules may be exchangeable, such that the first light source module is replaceable by the second light source module or vice versa, preferably without altering the emission properties of the light provided by the light source module actually used. Thus, as used herein, the term "mimic" refers to the fact that the emission properties of the at least one second light source module resemble the emission properties of the at least one first light source module in one or more relevant frequency bands. As used herein, a relevant frequency band is a frequency band used by the analytical instrument for analysis. Still, within this at least one relevant frequency band, slight deviations may be tolerated. Preferably, the at least one first light source module and the at least one second light source module provide substantially identical emission properties of light, such as substantially identical emission properties with regard to one or more of: an overall light intensity; a light intensity at one or more predefined wavelengths; a frequency distribution; a size and/or a geometry of at least one output facet at of the light source module; a spatial homogeneity of at least one output facet at of the light source module; an angular distribution of emission from at least one output facet at of the light source module.

In a further aspect of the present invention, a method for modifying an analytical instrument is disclosed, the analytical instrument being adapted for analyzing at least one sample. The analytical instrument comprises at least one first light source module. As used in the context of the present method, the term light source generally refers to a module being capable of providing light to the analytical instrument, such as to at least one beam path of the analytical instrument. The first light source module may comprise an LED and/or a conventional light source such as one of an incandescent lamp, a fluorescent lamp and a gas discharge lamp, or another type of light source. Alternatively, the first light source module may comprise at least one LED.

The method comprises the step of replacing the first light source module by a second light source module. The second light source module each comprises at least one LED and at least one light guiding rod adapted to guide and shape light emitted by the LED. The second light source module specifically may be a light source module according to the present invention, such as disclosed in further detail above or below.

The first light source module and the second light source module further each may optionally comprise at least one control unit. Thus, the first light source module may optionally comprise at least one control unit and/or the second light source module may optionally comprise at least one control unit. Additionally or alternatively, one or more of the first light source module and the second light source module may as well be designed without control capabilities. Thus, in an embodiment, the first light source unit may not have a control unit, whereas the second light source unit may have a control unit.

The second light source module further comprises at least one memory device. With regard to potential embodiments of the at least one memory device, reference may be made to the options disclosed above. The memory device has stored therein at least one driving parameter set, for driving the second light source module, in such a way that emission properties of light provided by the first light source module are mimicked by the second light source module. As regards to the term "mimic", reference may be made to the definition given above. For further preferred embodiments, optional details or definitions, reference may be made to the light source module according to the present invention as disclosed above or as disclosed in further detail below.

In a further example not forming part of the invention, a method for analyzing at least one sample is disclosed. The sample may be a sample as described above. In the method for analyzing at least one sample, a light source module is used, e.g. a light source module as described above. The light source module comprises at least one LED and at least one light guiding rod adapted to guide and shape light emitted by the LED. Further, at least one control unit may optionally be used, e.g. a control unit as described above. The light source module comprises at least one memory device. The memory device has stored therein at least one driving parameter set. The driving parameter set, preferably (in case a plurality of driving parameter sets is provided) each driving parameter set, provides driving conditions adapted to drive the LED in such a way that predetermined emission properties of light provided by the light source module are generated, e.g. as described above.

The driving parameter set contained in a memory device may contain at least two different driving parameter sets for at least two different types of LEDs, as described above. The appropriate set may be chosen according to the type of LEDs actually used.

In a further aspect of the present invention, a use of the light source module and/or the analytical instrument as described above or as described in further detail below is disclosed. Thus, generally, the light source module and/or the analytical instrument as disclosed herein may be used for bioanalytical and/or for biochemical methods.

The light source module, the analytical instrument, the analytical system and the method for modifying an analytical instrument as disclosed by the present invention may exhibit significant advantages over the prior art.

Thus, a setup may be realized in which the light source module is easily replaceable, without the need of major further modifications to the analytical instrument. As an example, the light source module may be an encapsulated unit including the LED, the memory device and the guiding rod. This setup allows for an easy and quick replacement of the light source module. Further, a new light source module may be designed for the same analytical instrument and may be validated, without the necessity of modifying remaining parts of the analytical instrument. This advantage is specifically emphasized by the fact that, by keeping other parts of the analytical instrument unchanged, accreditations and/or approvals and/or certifications of the analytical instrument may remain valid, such as FDA approvals and/or a simplified new approval and/or revalidation procedure may be used. Due to the concept of providing the light source module, the light source module itself may be validated independently from the analytical instrument.

The present invention, preferably the light source module according to the present invention, may enable to replace "conventional" light sources like e.g. halogen lamps by LEDs comprising single LEDs or LED arrays, bearing the advantage that LEDs last longer and are cheaper. LEDs used in the present invention may be regarded as modular. Electrical power consumption and certain mechanical parameters are crucial, as the light source module may be considered as a modular and/or external module. It is highly welcomed to use LED technology in new generation products as they are ecologically and economically superior to "conventional" light sources. The light source module and the analytical instrument according to the present invention may be built in a way that it can always be adapted for new types of LEDs as they will become available, while the output of the light source module and/or of the analytical instrument and its interfaces to its elements may remain identical. The present invention, preferably the light source module according to the present invention, further even may offer the possibility to replace halogen and gas discharge light sources in older instruments already out in the field. The light source module according to the present invention may be a powerful and/or long-lasting and/or universal module, e.g. as it may be used in a wide range of instrument families of different generations. The use of white LEDs as disclosed in the present invention, e.g. for an illumination of biological samples and/or for measuring a presence and/or a concentration of specific molecules, may provide a solution that may be easier and/or lower cost than integrating a bunch of multiplex single color LEDs including all of their individual primary optics. The use of at least one white LED may lead to a more flexible choice of excitation wavelength. This may include possible multi-use for new markers, e.g. later in a lifecycle of an instrument, and/or of the analytical instrument according to the present invention without necessary redesign of hardware. Spectral shifts of individual LEDs may not matter as much concerning cross talk as spectrally shifted single color LEDs do. Thus, the spectrum of the light source module according to the present invention may be improved in respect to devices known from prior art. The present invention may offer the possibility to use small LEDs with huge numerical apertures as they may be attached to the tapered light guiding rod and converted to fit to the secondary optics. The power of the light output of the LED may substantially be preserved on both sides of the guiding rod. The present invention may provide a long-lasting and/or non-degrading light source module with the highest luminous flux with regard to electrical power and coverage of all required wavelengths at their specific luminous powers for different assays and/or for different analytical instruments and/or for different applications. The present invention may provide a light source module, specifically a modular light source, which may replace gas discharge lamps and/or may be interchangeable, regardless of a current generation and/or availability of bright white LEDs and/or regardless of the secondary optics as given in the respective instrument and/or in the analytical instrument.

### Short description of the Figures

Further details of the invention may be derived from the following disclosure of preferred embodiments. The features of the embodiments may be realized in an isolated way or in combination. The invention is not restricted to the embodiments. The embodiments are schematically depicted in the Figures. Identical reference numbers in the Figures refer to identical elements or functionally identical elements or elements corresponding to each other with regard to their functions.

In the figures:
- Figure 1A: shows exemplary spectra of two different LEDs;
- Figures 1B and 1C: show two different embodiments of LED chips;
- Figure 2: shows an embodiment of the analytical instrument according to the present invention;
- Figure 3: shows a comparison of a spectrum of a white LED, spectra of differently colored LEDs and a spectrum of a halogen lamp compared with target wavelengths according to an embodiment of a light source module according to the present invention;
- Figure 4: shows a schematic view of an embodiment of an analytical instrument according to the present invention;
- Figure 5: shows a cross-sectional view of an embodiment of a light source module according to the present invention;
- Figure 6: shows an embodiment of a tapered light guiding rod of an embodiment of a light source module according to the present invention; and
- Figure 7: shows an example of driving parameter sets for an embodiment of a light source module according to the present invention.

### Exemplary embodiments

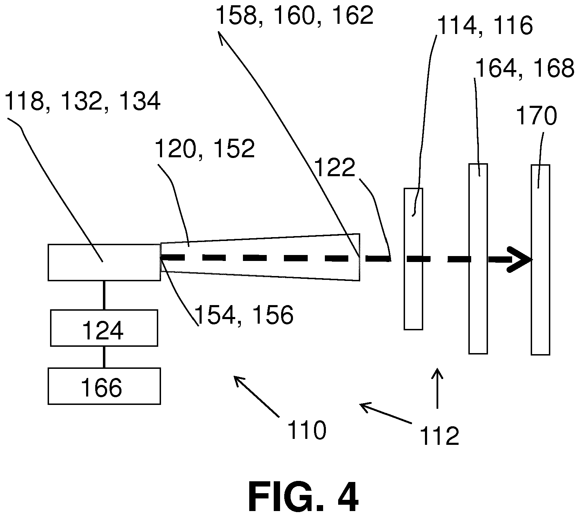

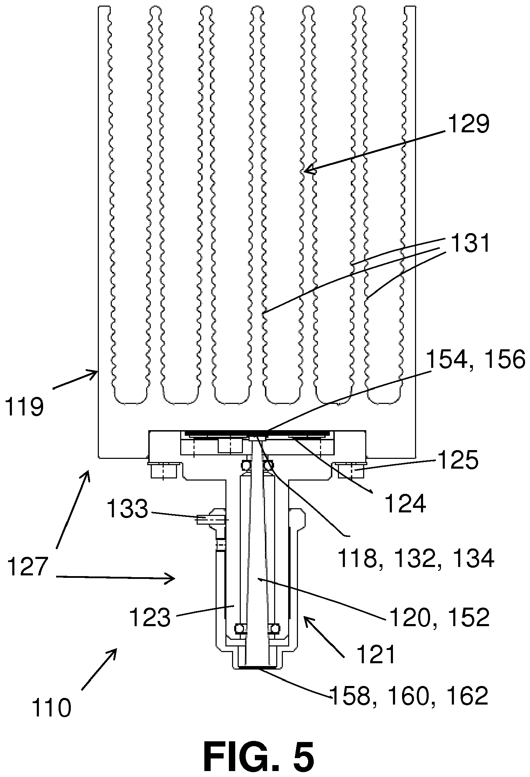

In Figure 5, an embodiment of a light source module 110 according to the present invention is shown and Figure 4 comprises another embodiment of the light source module 110 according to the present invention. The light source module 110 according to the present invention is a light source module 110 for use in an analytical instrument 112 for analyzing at least one sample 114, comprising at least one analyte 116.

The analyte 116 preferably may be an analyte of specific interest for the analysis of biological samples using chromogenic and/or fluorogenic reagents and/or reactions, such as anti-body labeled dyes and/or fluorescently labeled oligonucleotides and/or absorbing biological reaction products such as NADH. However, additionally or alternatively, a large number of other types of analytes may be used.

A schematic view of an embodiment of an analytical instrument 112 according to the present invention is shown in Figure 4. The light source module 110 comprises at least one LED 118 and at least one light guiding rod 120 adapted to guide and shape light 122 emitted by the LED 118. The light source module 110 further may optionally comprise at least one control unit 124. The light source module 110, e.g. the optional control unit 124, comprises at least one memory device 126. The memory device 126 has stored therein at least one driving parameter set 128 for driving the LED 118 in such a way that desired emission properties of light provided by the light source module 110 are generated. Each driving parameter set 128 may provide driving conditions adapted to drive the LED 118 in such a way that desired emission properties of light 122 provided by the light source module 110 are generated. The light guiding rod 120 may be located between the LED 118 and the sample 114, wherein the sample 114 may comprise the analyte 116 to be detected, i.e. the analyte in question.

The LED 118 may comprise at least one white LED 132, most preferably at least one LED array 134. E.g., the LED 118 may be a single spot LED. The LED array 134 may e.g. be a 2 x 2 array and/or a 2 x 3 array etc. The light guiding rod 120 may be selected from differently shaped tapered rods, as shown exemplary in Figures 4-5.

In the exemplary embodiment depicted in Figure 5, the light source module 110 may have a modular setup. Thus, the light source module 110 comprises a basis module 119 and a guiding module 121, the guiding module 121 having a rod housing 123. The guiding module 121 preferably may be attached to the basis module 119 by one or more connection elements 125, such as one or more screws. Preferably, the at least one connection element 125 provides an adjustability in order to allow for an alignment of the modules. The at least one LED 118 preferably may be embedded in between the at least one basis module 119 and the at least one rod housing 123. Thus, the at least one rod housing 123 and the basis module 119 may form a source housing 127 or a part thereof.

The light source module 110 may further comprise at least one heat sink 129. As an example, the at least one heat sink 129 may comprise a plurality of heat sink ribs 131 on a rear side of the light source module 110. Preferably, the plurality of heat sink ribs 131 are fully or partially made of a metallic material, such as aluminum and/or copper. Generally, the basis module 119 may be made fully or partially of the metallic material. Preferably, the at least one LED 118 rests on a surface of the basis module 119, preferably a flat surface. Thus, a large area heat transfer may take place in between the LED 118 and the basis module 119. Optionally, one or more heat transfer materials, such as one or more heat guiding pastes, may be located in between the LED 118 and the basis module 119, in order to improve the heat transfer from the LED 118 and the heat sink ribs 131.

In this embodiment or in other embodiments of the light source module 110, the at least one light guiding rod 120 preferably is adjustable with regard to its alignment relative to the at least one LED 118. Thus, the at least one light guiding rod 120 may be received inside the guiding module 121 in an adjustable manner, such as by allowing for an adjustment of a position and/or an orientation of the light guiding rod 120. As an example, the light guiding rod 120 may be received inside and adjustment tube 133 which allows for rotating and/or shifting the light guiding rod 120 inside the guiding module 121.

The control unit 124 and/or the memory device 126 may comprise at least one EEPROM. It is a central point of the present invention to build and/or to get a modular set-up comprising an integrated LED light source providing a standard interface, e.g. electrically and/or optically, delivering reproducible optical power at all wavelengths or wavelength bands needed for the analytical instrument 112, e.g. for the analyzer, independent of the type of the LED 118, preferably independent of the type of LED 130, built in. An EEPROM, e.g. on a printed circuit board (PCB) of a module comprising the LED 118, may store the at least one driving parameter set for this purpose in the memory device 126, e.g. with all currents necessary for each application for the actually built-in LED type. If e.g. a new generation LED 130 may be used, the EEPROM may be loaded with an individualized data set, comprising a new driving parameter set 128, accordingly. This may lead to identical optical output from every LED 118, e.g. from every light source module, independent of the type of LED 118, e.g. independent of the LED type contained. A calibration may be done by using the memory device 126, e.g. in the EEPROM's driving parameter set 128.

The light source module 110 in the exemplary embodiment as depicted in Figure 4 or in other embodiments of the present invention may be received in the analytical instrument 112 in a replaceable manner. Thus, as discussed above, one or more mounting elements may be provided for replaceably mounting the light source module 110 in the analytical instrument 112. As an example, one or more parts of the source housing 127 of the light source module 110 and/or one or more mounting elements of the light source module 110 may be mounted to one or more corresponding mounting elements of the analytical instrument 112, such as for forming a reversible force-fit and/or form-fit connection. As an example, the rod housing 123 may be plugged into an appropriate opening of the analytical instrument 112 providing an entrance window for coupling the light 122 into a beam path of the analytical instrument 112. For securing the light source module 110 and preventing the light source module 110 from moving and/or rotating inside the analytical device 112, one or more securing elements may be provided, such as one or more screws and/or a bayonet coupling. These details, which may easily be completed by the skilled person, are not depicted in a schematic drawing of Figure 4.

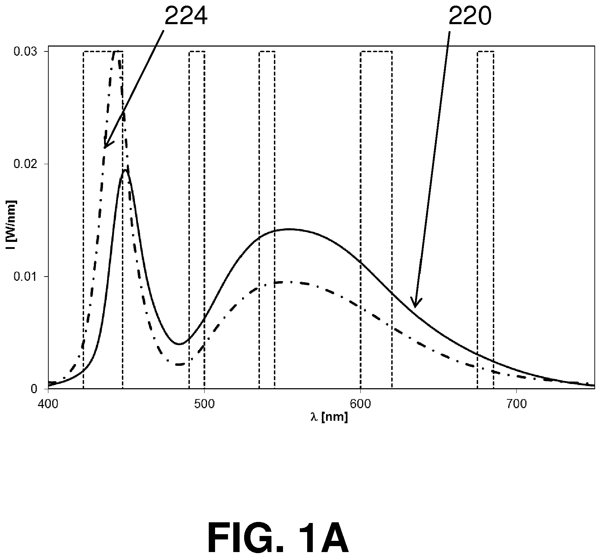

Figure 1A shows spectra of two different LEDs 118, e.g. of two white LEDs 132. Figure 1A particularly shows two examples of white LED spectra. In Figure 1A, an intensity I in W/nm is shown in dependence of the wavelength λ in nm of the light 122 emitted by the two different LEDs 118. Figure 1A shows in particular a spectrum 220 of a LED chip A 218 and a spectrum 224 of a LED chip B 222. The dotted lines indicate five wavelength ranges within which an embodiment of an analytical instrument 112 according to the present invention may require specific and/or well-defined spectral power of the light 122 emitted by the light source module 110.

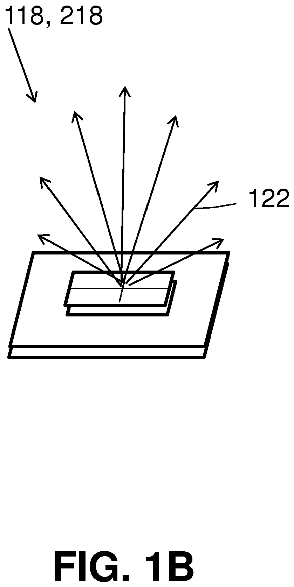

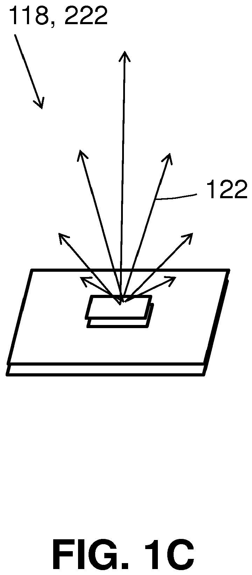

Figure 1B shows the LED chip A 218, and Figure 1C shows the LED chip B 222. LED chip A 218 and/or LED chip B 222 may be a LED 118 of an embodiment of a light source module 110 according to the present invention. In an embodiment of the method for modifying an analytical instrument 112 for analyzing at least one sample 114 according to the present invention one of these two different LEDs 118 may be comprised by a first light source module 110. The first light source module 110 e.g. may comprise LED chip A 218. LED chip A 218 may be discontinued, e.g. broken. LED chip B 222 may be the successor product of LED chip A 218. Typically, successor products may provide different spectra and/or a different chip sizes and/or a different angular distributions of emission compared to former products. Figure 1A shows the differences of the spectra of the LED chip A 218 and the LED chip B 222. Figure 1B and 1C particularly show the differences in chip size and angular distribution of emission of the LED chip A 218 and the LED chip B 222.

A goal according to the present invention may be to achieve identical light output, e.g. in terms of spectral power at the frequencies of interest and/or in terms of a spatial distribution and/or of an angular distribution when using a light source module 110 with two different LEDs 118, e.g. with LED chip A 218 or LED chip B 222. In an embodiment, the spectral power may be adjusted by using the at least one driving parameter set 128, whereas the spatial distribution and/or the angular distribution may be determined and/or adjusted by a proper design of the at least one light guiding rod 120.

The method of modifying an analytical instrument 112 according to the present invention comprises the step of replacing the first light source module 110, e.g. with LED chip A 218, by a second light source module 110. The second light source module may comprise LED chip B 222. The first light source module 110 and the second light source module 110 each comprise at least one LED 118, e.g. LED chip A 218 and LED chip B 222, and at least one light guiding rod 120 adapted to guide and shape light 122 emitted by the LED 118, e.g. by LED chip A 218 or LED chip B 222. The first light source module and the second light source module further each comprise at least one optional control unit 124. The first light source module and the second light source module further each comprise at least one memory device 126, such as a memory device 126 being part of an optional control unit 124. The memory device 126 has stored therein at least one driving parameter set 128, for driving the first light source module and the second light source module respectively in such a way that desired emission properties of light provided by the first light source module or the second light source module are generated.

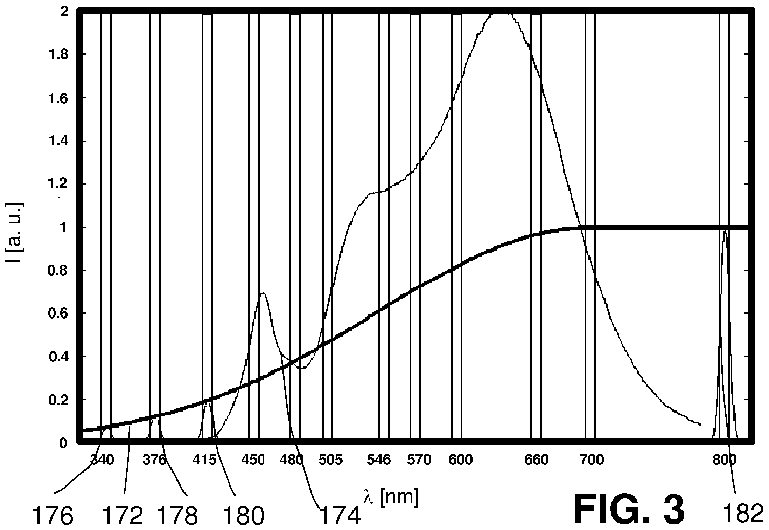

Figure 3 shows different relative intensities I in arbitrary units in dependence of the wavelength λ in nm. At least one of the numbers written on the wavelength axis and the vertical stripes may indicate a wavelength, which may be important in a method for analyzing at least one sample 114 not forming part of the present invention. Line 172 shows the spectrum of halogen. Line 174 shows the spectrum of a white LED 132. Line 176 shows the spectrum of a colored LED specified with 340 nm. Line 178 shows the spectrum of a colored LED specified with 376 nm. Line 180 shows the spectrum of a colored LED specified with 415 nm. Line 182 shows the spectrum of a colored LED specified with 800 nm. E.g. by using LEDs 176, 178 and 178 in a light source module 110 which drives the LEDs at intensities as depicted in Fig. 3, the light source module 110 mimics the emission properties of the halogen spectrum 172. In other words, the light source module 110 mimics a light source module having a halogen lamp, at least within the frequency bands of 340 nm, 376 nm and 415 nm.

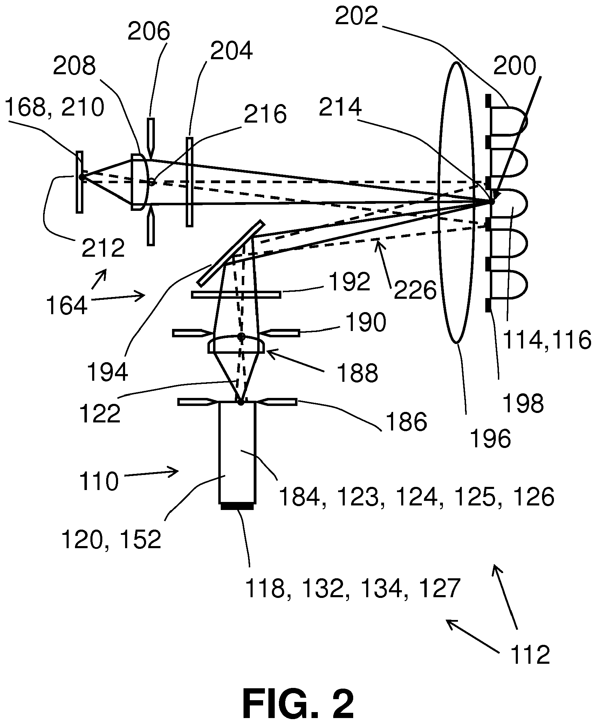

Figure 2 shows a further and more detailed potential embodiment of an analytical instrument 112 according to the present invention, such as of the analytical instrument 112 as described above. The analytical instrument 112 may be a real-time PCR system, e.g. the LightCycler® 480 System from Roche Applied Science, preferably for an analysis of gene expression and/or genetic variation.

This embodiment of the analytical instrument 112 may comprise at least one light source module 110, such as one or more of the light source modules 110 as disclosed above and/or as disclosed in further detail below. The light source module 110 may comprise at least one LED 118, preferably at least one white LED 132 and/or at least one LED array 134, e.g. arranged at least partially inside a source housing 127.

The analytical instrument 112 in Figure 2 may further comprise at least one primary optics 184, e.g. inside a rod housing 123. At least one optional control unit 124 may be arranged next to the primary optics 184. The optional control unit 124 may comprise at least one connection element 125 and/or at least one memory device 126. The primary optics 184 may comprise at least one light guiding rod 120, preferably at least one tapered light guiding rod 152. These elements, e.g. the white LED 132 and the primary optics 184 and the optional control unit 124, preferably with their components, may form the light source module 110 and/or a part of the light source module 110 according to the present invention of this analytical instrument 112.

Optionally, at least one further light source module 110 may be provided, e.g. for replacing the light source module 110. This option, which is not depicted in the figures and which the skilled person easily may complete in view of the disclosure of the details of the analytical instrument 112 and/or the light source module 110 as disclosed herein, shows an embodiment of an analytical system, the analytical system having at least one analytical instrument 112 with one or more light source modules 110.

Generally, the light source module 110 may provide light 122 which may be used for exposing the sample 114 and/or the analyte 116, such as for exciting the sample 114 and/or the analyte 116 or one or more parts thereof. The analytical device 112 may comprise at least one secondary optics 164, preferably attached to the primary optics 184. The light 122 may be shaped and/or at least partially blocked by at least one field stop 186. This light 122 may be guided through at least one beam path 226, which may also be referred to as an excitation beam path. In the beam path 226, at least one lens and/or objective 188 and/or at least one diaphragm and/or pupil stop 190 and/or at least one filter element 192 may be present. The filter element 192 may be or may comprise a gray filter and/or a filter having spectral filtering properties. As an example, the filter element 192 may comprise a filter wheel, such as a filter wheel having circumferential sections of varying transmission, depending on an angular position of the filter wheel. The angular position of the filter wheel may be manually adjustable and/or may be adjusted by the analytical instrument 112, such as by the optional control unit 124 and/or a data processing device of the analytical instrument 112.

Further, the excitation beam path 226 may comprise one or more deflection elements such as one or more mirrors. In the exemplary embodiment depicted in Figure 2, at least one folding mirror 194 is depicted. This deflection element, such as the at least one folding mirror 194, may also be used for scanning the sample 114, by changing a spot of exposure.

Thus, the deflection element may be or may comprise a scanning mirror adapted for subsequently exposing different areas of the sample 114 with light 122.

Having passed the deflection element, the light 122 is directed onto the sample 114. The sample 114 may generally have an arbitrary shape. In the exemplary, non-limiting embodiment depicted in Figure 2, the sample 114 may comprise at least one PCR multiwell plate, preferably located in in a field plane 200. The sample 114 may comprise various sample areas, such as one or more wells 202, which may be filled with sample liquid and/or other types of samples and/or analyte 116. Further, one or more conditioning elements for conditioning the sample 114 and/or the analyte 116 may be present, such as one or more heating lids 198.

As further depicted in the exemplary embodiment of Figure 2, one or more further optical elements may be provided in front of the sample 114, such as one or more field lenses 196. The one or more further optical elements in front of the sample 114 may be adapted to interact with light 122 before reaching the sample 114 and/or with light 122 coming from the sample 114.

The light 122 may interact with the sample 114 and/or the analyte 116 in various ways, as disclosed in further detail above. Thus, as an example, the light 122 may excite the sample 114 and/or the analyte 116 and/or parts thereof, such as by inducing fluorescence and/or phosphorescence. Additionally or alternatively, other types of interaction may occur, such as a reflection, with or without modifying the spectral properties of the reflected light 122. In any case, having interacted with the sample 114 and/or the analyte 116, light 122 originating from the sample 114 (e.g. light emitted by the sample 114 and/or the analyte 116 and/or light reflected by the sample 114 and/or the analyte 116) propagates towards at least one light detector 168, such as a CCD camera 210.

In the beam path between the sample 114 and the light detector 168, which also might be referred to as the detection beam path or emission beam path, one or more optical elements may be present. Thus, as depicted in the exemplary embodiment of Figure 2, one or more filter elements 204 may be present, which may be or may comprise one or more spectral filters and/or one or more gray filters. As an example, again, the at least one filter element 204 may comprise at least one filter wheel, also referred to as an emission filter wheel. For potential embodiments of the filter wheel, reference may be made to the filter wheel option discussed with regard to filter element 192.

Further, in the emission beam path, one or more diaphragms may be present, such as one or more pupil stops 206. Further, one or more lenses and/or objectives may be present, such as objective 208. As disclosed in the exemplary embodiment depicted in Figure 2, a focus 214 in the field plane 200 on the side of the sample 114 may be imaged onto a focus 214 in a field plane 212 on the light detector 168.

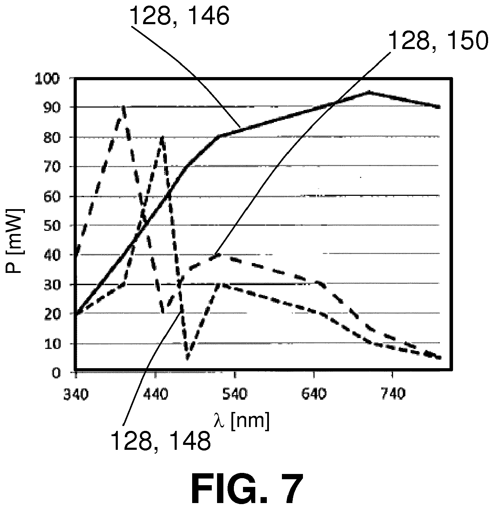

The light source module 110 and/or the analytical instrument 112, such as in the embodiments depicted in one or more of the Figures 2, 4 and 5, further may comprise at least one power source 166 adapted to provide electrical power to the LED 118. The driving parameter set 128 contained in the memory device 126 may contain at least two different driving parameter sets for at least two different types of light source modules 110. The emission properties may comprise at least one emission property selected from the group consisting of: a power of the light 122 provided by the light source module 110; a frequency of the light 122 provided by the light source module 110; a frequency band of the light 122 provided by the light source module 110; a spatial emission characteristic of the light 122 provided by the light source module 110. The driving parameter sets may comprise at least two different sets adapted for driving the LED 118 for at least two different types of analytical applications. An example of driving parameter sets for an embodiment of a light source module 110 according to the present invention is shown in Figure 7 and in Table 1.

**Table 1: An example of driving parameter sets.**

| **Wavelength** | **Halogen 50W** | **LED1** | **Power** | **LED2** | **Power** |
|---|---|---|---|---|---|
| 340 nm | 20 mW | 20 mW | 100% | 40 mW | 50% |
| 400 nm | 40 mW | 30 mW | 133% | 90 mW | 44% |
| 450 nm | 58 mW | 80 mW | 74% | 20 mW | 300% |
| 480 nm | 70 mW | 5 mW | 1400% | 35 mW | 200% |
| 520 nm | 80 mW | 30 mW | 266% | 40 mW | 200% |
| 650 nm | 90 mW | 20 mW | 450% | 30 mW | 300% |
| 710 nm | 95 mW | 10 mW | 950% | 15 mW | 633% |
| 800 nm | 90 mW | 5 mW | 1800% | 5 mW | 1800% |

Table 1 shows a simplified example of a data base 126, e.g. a lookup table, as may be stored in the EEPROM in an embodiment according to the present invention. Table 1 shows, for different wavelengths, the output power of a 50 W halogen lamp, which is also shown in Figure 7, line 146 in a diagram of the power P in mW in dependency of the wavelength λ in nm. Further, Table 1 and Figure 7 show power profiles for two different LEDs 118, in particular of a LED 1, shown in line 148 and for a LED 2, shown in line 150. The power columns of Table 1 show the percentage of total power needed from LED 1 or LED 2 to get the same output power as during a use of the halogen 50 W lamp. Some LEDs 130 may be slightly overpowered for a short time interval, e.g. when the percentage of the power needed is higher than 100 %. However, power values above 100 % may be reached by integrating more than one of the requested LEDs 118, e.g. of the requested LED type.

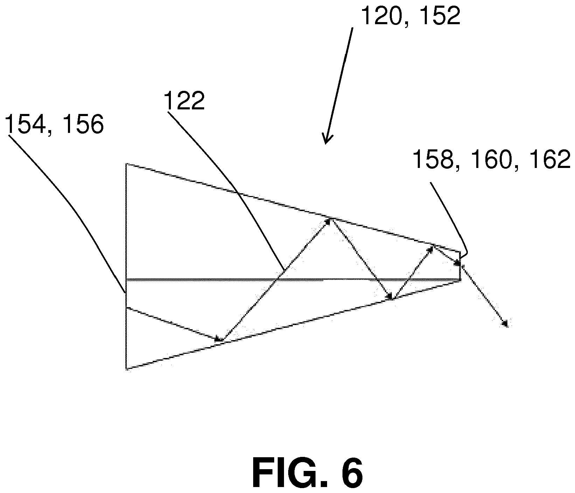

The light guiding rods 120 may comprise one of a tapered light guiding rod 152, as e.g. shown exemplary in Figure 6, and a linear light guiding rod. Figure 6 shows a tapered light guiding rod 152 of an embodiment of a light source module 110 according to the present invention with a beam path of a single light beam 122. As shown in Figure 7, the light 122 may propagate in a direction from a wider diameter to a smaller diameter of the light guiding rod 120. Alternatively, the light 122 may propagate from a smaller diameter to a wider diameter of the light guiding rod 120, as shown in the embodiments of Figure 4 and Figure 5. The light 122 may be guided through the tapered light guiding rod 152 by total reflections.

The light guiding rod 120 may comprise at least one front end 154, as shown in the embodiments of Figures 4-6. The front end 154 may comprise at least one entrance facet 156. The geometry of the entrance facet 156 may fit to the geometrical properties of the light 122 emitted by the LED 118. The light guiding rod 120 may comprise at least one back end 158. The back end 158 may comprise at least one exit facet 160. The exit facet 160 may comprise at least one scattering surface 162. The light guiding rod 120 may e.g. be part of an opto-mechanical interfacing, as e.g. shown in an embodiment of the present invention in Figure 5.

The light guiding rod 120 may fulfill two boundary conditions: On the front end 154 it may be fitted onto a light-emitting surface of the LED 118, e.g. of the LED 130 in use. On the back end 158 it may fit to at least one secondary optics 164. It may, however, be possible to fit the secondary optics 164 to the back end 158 of the tapered light guiding rod 152, e.g. also called tapered rod. But, as mentioned above, a medical analyzer, as e.g. the light source module 110 according to the present invention, may have to be certified according to ISO (International Organization for Standardization) and/or FDA (Food and Drug Administration) regulations. Still, by providing an exchangeable light source module 110 according to the present invention, as outlined in further detail above, the light source module 110 may be replaced by keeping other components of the analytical instrument 112 unchanged, thereby preferably maintaining specific approvals (such as FDA approvals) and/or allowing for a simplified revalidation of the analytical instrument, as the update typically is strictly limited to a component of the analytical instrument. This advantage preferably may be achieved by providing a well-defined interface between the analytical instrument 112 and the exchangeable light source module 110. It therefore may make sense to fit the back end 158 of the tapered light guiding rod 152 onto the secondary optics 164 being a part of the light source module 110 and/or the analytical instrument 112, e.g. designed as analyzer. The secondary optics 164 preferably is part of the analytical instrument 112 and, thus, remains at least partly unaltered when the light source module 110 is exchanged.

Nevertheless, most important may be the design of the front end 154 of the light guiding rod 120. The light guiding rod 120 may be a cylinder or a cuboid in the sense of parallel axes. But it does not need to be a cylinder or a cuboid in the sense of parallel axes. Most preferably it may be a tapered light guiding rod 152, e.g. with the geometry of a frustum with rectangular bases with different sizes. Fitting the size and the shape of each end, the front end 154 and/or the back end 158, onto its corresponding surface, e.g. of the secondary optics 164 and/or of the LED 118, may lead to an optimized distribution of the light 122 in the phase space and/or an overall power of the light source module 110 may be enhanced. The procedure obeying these rules may lead to a highest light-emitting efficiency, e.g. if, at least for comparison, the same LED type is used as in devices known from prior art. Primary optics, e.g. the light source module 110 and/or the LED 118 and/or the light guiding rod 120, may be a key factor for optimum light efficiency. The tapered light guiding rod 152 may act as a conversion element with two completely different interfaces at the front end 154 and the back end 158, respectively. The size and/or the shape of the entrance facet 156 may fit as accurately as possible to the geometrical envelope of the radiating surface of the LED 118, e.g. of the LED 130. The back end 158 may offer freedom of choice concerning the size of the exit facet 160. This may be a great advantage for both, new instrument design as well as adaptation of the light source module 110 to an existing instrument. There may be preferably a plug and play compatibility of the light source module 110 according to the present invention to existing instruments, e.g. for existing instruments in the field of biology or biotechnology. For a critical illumination e.g. a large exit facet 160 may be chosen. According to the conservation of etendue, a numerical aperture of the illumination may be reduced at the back end 158.

A radiating surface of the LED 130 and/or of the LED array 134 may range to the boundaries of the entrance facet 156, e.g. on the front end 154 of the light guiding rod 120. The light guiding rod 120 may be either linear or may become conically wider towards the exit facet 160, also called outlet facet, e.g. attached at the back end 158 of the light guiding rod 120.

A specific embodiment of the present invention may comprise a light guiding rod 120 with a "segmented pupil". If more than one LED 130 is used or needed in order to get all the wavelengths requested and/or in order to reach the intensity needed at a specific wavelength, the problem may occur that using only one or a part of all LEDs 130 in the light source module 110, they may not fill the entrance facet 156 of the light mixing rod 120, because only the LED array 134, e.g. the ensemble of all LEDs 130, may fit the entrance fact of the light guiding rod 120, which may also act as a light mixing rod, e.g. as one of the etendue conserving rules. If an individual LED's light is not coupled into the light guiding rod 120 maintaining their etendue, this may lead to dark stripes, also called the checkerboard effect, in the far field of the illumination. If homogeneous light 122 is needed, this may be a drawback. In order to prevent this problem, the scattering surface 162 may be added to the exit facet 160 of the light guiding rod 120. The scattering surface 162 may comprise an element selected from the group consisting of: at least one sandblasted surface; a holographic grating; scattering particles; other elements being able to scatter the light 122 in such a way that the dark stripes and/or inhomogeneities may be removed and/or smoothened. The scattering surface 162 preferably may lead to a mixing of light pencils in their planar distribution as well as of their propagation angles. A loss of light 122 due to an increase of the etendue may be accepted if a homogenization effect may be required as major advantage. The exit facet 160 may be considered as a secondary light source that may be quasi Lambertian, e.g. with almost perfect cosine-shaped luminance distribution. The etendue in such an embodiment may nevertheless be enlarged, but a homogeneity may be maintained and no dark lines may occur. A reduction of intensity and/or an increase of etendue may be limited e.g. by the total internal reflection in the light guiding rod 120, which preferably may be close to one and may therefore be acceptable.

An embodiment of the analytical instrument 112 is shown in Figure 4. The analytical instrument 112 may be a device for analyzing at least one sample 114, e.g. at least one analyte 116. The analytical instrument 112 comprises at least one light source module 110 according to the present invention. The analytical instrument 112 is adapted to direct light 122 emitted by the light source module 110 onto at least one sample 114, e.g. comprising at least one analyte 116. The analytical instrument 112 further may comprise at least one secondary optics 164 for shaping the light 122 emitted by the light source module 110 and/or for analyzing the light 122. The secondary optics 164 preferably may comprise at least one telescope. The light guiding rod 120 may comprise at least one back end 158. The back end 158 may fit onto the secondary optics 164, e.g. as described above. The analytical instrument 112 further may comprise at least one light detector 168 adapted to receive light 122. The light 122 is selected from light 122 emitted by the sample 114, light 122 reflected by the sample 114 and light 122 emitted by the light source module 110. Further, the embodiment of the analytical instrument 112 shown in Figure 4 may comprise at least one power source 166. The analytical instrument 112 further may comprise at least one filter element. The filter element may be part of the secondary optics 164 or may be separate from the secondary optics 164. The analytical instrument 112 may be arranged such that it comprises at least one beam path. The LED 118 may be arranged at a starting point of the beam path followed by the light guiding rod 120. The light guiding rod 120 may be followed by the secondary optics 164. At least one sample 114, e.g. a biological sample, may be arrangeable and/or arranged behind the light guiding rod 120, e.g. between the light guiding rod 120 and the light detector 168, as shown in Figure 4. The optional control unit 124 may be attached to the LED 118. The power source 166 may be attached to the optional control unit 124. The light detector 168 may be followed by at least one processing unit 170. The processing unit 170 may be a device being able to evaluate at least one signal provided by the light detector 168. The processing unit 170 may be a separate element or may be a part of the optional control unit 124 or of the computer. The processing unit 170 may be able to evaluate at least one absorption spectrum and/or at least one emission spectrum and/or at least one picture and/or at least one detection influenced by the sample 114 and/or detected by the light detector 168. The processing unit 170 may be able to analyze the sample 114 in respect to specific molecules and/or atoms and/or structures of the sample 114.

In a method not forming part of the present invention for analyzing at least one sample 114, a light source module 110, e.g. the light source module 110 according to the present invention, is used. The light source module 110 comprises at least one LED 118 and at least one light guiding rod 120 adapted to guide and shape light 122 emitted by the LED 118. Further, at least one control unit 124 may be used. The light source module 110, e.g. the optional control unit 124, comprises at least one memory device 126. The memory device 126 has stored therein at least one driving parameter set 128. Each driving parameter set 128 provides driving conditions adapted to drive the LED 118 in such a way that predetermined emission properties of light 122 provided by the light source module 110 are generated. The driving parameter set 128 contained in a memory device 126 may contain at least two different driving parameter sets 128 for at least two different types of LEDs 118. The appropriate set may be chosen according to the type of LED 118 actually used.

**List of reference numbers**

| | | | |
|---|---|---|---|
| 110 | Light source module | 168 | Light detector |
| 112 | Analytical instrument | 170 | Processing unit |
| 114 | Sample | 172 | Line |
| 116 | Analyte | 174 | Line |
| 118 | Light-emitting diode (LED) | 176 | Line |
| 119 | Basis module | 178 | Line |
| 120 | Light guiding rod | 180 | Line |
| 121 | Guiding module | 182 | Line |
| 122 | Light | 184 | Primary optics |
| 123 | Rod housing | 186 | Field stop |
| 124 | Control unit | 188 | Objective |
| 125 | Connection element | 190 | Pupil stop |
| 126 | Memory device | 192 | Filter element |
| 127 | Source housing | 194 | Folding mirror |
| 128 | Driving parameter set | 196 | Field lens |
| 129 | Heat sink | 198 | Heating lid |
| 131 | Heat sink ribs | 200 | Field plane |
| 132 | White LED | 202 | Well |
| 133 | Adjustment tube | 204 | Filter element |
| 134 | LED array | 206 | Pupil stop |
| 146 | Line | 208 | Objective |
| 148 | Line | 210 | CCD |
| 150 | Line | 212 | Field plane |
| 152 | Tapered light guiding rod | 214 | Focus in field plane |
| 154 | Front end | 216 | Focus in pupil plane |
| 156 | Entrance facet | 218 | LED chip A |
| 158 | Back end | 220 | Spectrum LED chip A |
| 160 | Exit facet | 222 | LED chip B |
| 162 | Scattering surface | 224 | Spectrum LED chip B |
| 164 | Secondary optics | 226 | Beam path |
| 166 | Power source | | |

## Claims

1. A light source module (110) for use in an analytical instrument (112) for analyzing at least one sample (114), the light source module (110) comprising at least one light-emitting diode (LED, 118), the light source module (110) further comprising at least one memory device (126), the memory device (126) having stored therein at least one driving parameter set (128), for driving the light-emitting diode (118) in such a way that desired emission properties of light (122) provided by the light source module (110) are generated,
**characterized in that**
the light source module (110) further comprises at least one light guiding rod (120) adapted to guide and shape light (122) emitted by the light-emitting diode (118), wherein the light guiding rod (120) comprises at least one front end (154), wherein the front end (154) comprises at least one entrance facet (156), wherein the geometry of the entrance facet (156) fits to the geometry of a surface area of the light-emitting surface of the light-emitting diode (118).

2. The light source module (110) according to one of the preceding claims, wherein the light-emitting diode (118) comprises at least one white light-emitting diode (132), preferably at least one light-emitting diode array (134).

3. The light source module (110) according to one of the preceding claims, wherein the memory device (126) stores at least two different driving parameter sets (128) for different applications of the light source module (118).

4. The light source module (110) according to one of the preceding claims, wherein the driving parameter set controls one or more of: a power of the light (122) provided by the light source module (110); a frequency of the light (122) provided by the light source module (110); at least one frequency band of the light (122) provided by the light source module (110); and intensity distribution of the light (122) provided by the light source module (110) as a function of the frequency of the light (122).

5. The light source module (110) according to one of the preceding claims, wherein the light source module (110) comprises at least one control unit (124).

6. The light source module (110) according to the preceding claim, wherein the control unit (124) controls a timing program to drive the light source module (110) through time segments, wherein each time segment provides an intensity within a frequency band adapted for use of the light source module (110).

7. The light source module (110) according to one of the two preceding claims, wherein the control unit (124) controls a timing program to activate light-emitting elements of the light-emitting diode (118), wherein the light-emitting diode (118) comprises two or more light-emitting elements, wherein the two or more light-emitting elements emit light of different frequencies.

8. The light source module (110) according to one of the preceding claims, wherein the memory device (126) comprises at least one EEPROM.

9. The light source module (110) according to the preceding claim, wherein the entrance facet (156) has a surface area which is in the range from -10% to +10% of the surface area of the light-emitting surface of the light-emitting diode (118).

10. The light source module (110) according to one of the preceding claims, wherein the light guiding rod (120) comprises a back end (158), wherein the back end (158) comprises an exit facet (160), wherein the exit facet (160) comprises at least one scattering surface (162).

11. An analytical instrument (112) for analyzing at least one sample (114), the analytical instrument (112) comprising at least one light source module (110) according to one of the preceding claims, the analytical instrument (112) having an entrance window for light generated by the light source module (110), the analytical instrument (112) being adapted to direct light (122) emitted by the light source module (110) onto the at least one sample (114).

12. The analytical instrument (112) according to the preceding claim, wherein the analytical instrument (112) further comprises at least one light detector (168) adapted to receive light (122), the light (122) being one or more of light (122) emitted by the sample (114), light (122) transmitted through the sample (114) and light (122) reflected by the sample (114).

13. An analytical system comprising an analytical instrument (112) with a first light source module having a non-light-emitting diode light source being different from an LED and a second light source module (110) with a light-emitting diode light source (118), the light characteristics of the second light source module (110) being adapted to mimic the first light source module characteristics, wherein the second light source module (110) is the light source module (110) according to claim 1.

14. The analytical system according to the preceding claim, wherein the first light source module (110) is replaceable by the second light source module (110).

15. A method for modifying an analytical instrument (112) for analyzing at least one sample (114), wherein the analytical instrument (112) comprises a first light source module (110), wherein the method comprises the step of replacing the first light source module (110) by a second light source module (110), wherein the second light source module (110) comprise at least one light-emitting diode (118) and at least one light guiding rod (120) adapted to guide and shape light (122) emitted by the light-emitting diode (118), wherein the second light source module (110) further comprises at least one memory device (126), the memory device (126) having stored therein at least one driving parameter set (128), for driving the second light source module (110) in such a way that emission properties of light provided by the first light source module (110) are mimicked by the second light source module (110), wherein the light guiding rod (120) comprises at least one front end (154), wherein the front end (154) comprises at least one entrance facet (156), wherein the geometry of the entrance facet (156) fits to the geometry of a surface area of the light-emitting surface of the light-emitting diode (118).

## Patentansprüche

1. Lichtquellenmodul (110) zur Verwendung in einem Analysegerät (112) zum Analysieren mindestens einer Probe (114), wobei das Lichtquellenmodul (110) mindestens eine Leuchtdiode (LED, 118) umfasst, wobei das Lichtquellenmodul (110) ferner mindestens eine Speichereinrichtung (126) umfasst, wobei die Speichereinrichtung (126) mindestens eine darin gespeicherte Antriebsparametergruppe (128) zum Steuern der Leuchtdiode (118) aufweist, derart, dass erwünschte Emissionseigenschaften von durch das Lichtquellenmodul (110) bereitgestelltem Licht (122) erzeugt werden,
**dadurch gekennzeichnet, dass**
das Lichtquellenmodul (110) ferner mindestens eine Lichtführungsstange (120) umfasst, eingerichtet zum Leiten und Formen von durch die Leuchtdiode (118) emittiertem Licht (122), wobei die Lichtführungsstange (120) mindestens einen Vorderteil (154) umfasst, wobei der Vorderteil (154) mindestens eine Eintrittsfläche (156) umfasst, wobei die Geometrie der Eintrittsfläche (156) zu der Geometrie eines Oberflächenbereichs der Licht emittierenden Oberfläche der Leuchtdiode (118) passt.

2. Lichtquellenmodul (110) nach einem der vorhergehenden Ansprüche, wobei die Leuchtdiode (118) mindestens eine weiße Leuchtdiode (132) umfasst, vorzugsweise mindestens ein Leuchtdioden-Array (134).

3. Lichtquellenmodul (110) nach einem der vorhergehenden Ansprüche, wobei die Speichereinrichtung (126) mindestens zwei unterschiedliche Antriebsparametergruppen (128) für unterschiedliche Anwendungen des Lichtquellenmoduls (118) speichert.

4. Lichtquellenmodul (110) nach einem der vorhergehenden Ansprüche, wobei die Antriebsparametergruppe eines oder mehrere von einer Leistung des durch das Lichtquellenmodul (110) bereitgestellten Lichts (122), einer Frequenz des durch das Lichtquellenmodul (110) bereitgestellten Lichts (122), mindestens einem Frequenzband des durch das Lichtquellenmodul (110) bereitgestellten Lichts (122) und Intensitätsverteilung des durch das Lichtquellenmodul (110) bereitgestellten Lichts (122) als eine Funktion der Frequenz des Lichts (122) steuert.

5. Lichtquellenmodul (110) nach einem der vorhergehenden Ansprüche, wobei das Lichtquellenmodul (110) mindestens eine Steuereinheit (124) umfasst.

6. Lichtquellenmodul (110) nach einem der vorhergehenden Ansprüche, wobei die Steuereinheit (124) ein Zeitgebungsprogramm zum Antreiben des Lichtquellenmoduls (110) durch Zeitsegmente steuert, wobei jedes Zeitsegment eine Intensität mit einem Frequenzband bereitstellt, das zur Verwendung des Lichtquellenmoduls (110) eingerichtet ist.

7. Lichtquellenmodul (110) nach einem der zwei vorhergehenden Ansprüche, wobei die Steuereinheit (124) ein Zeitgebungsprogramm zum Aktivieren von Licht emittierenden Elementen der Leuchtdiode (118) steuert, wobei die Leuchtdiode (118) zwei oder mehr Licht emittierende Elemente umfasst, wobei die zwei oder mehr Licht emittierenden Elemente Licht unterschiedlicher Frequenzen emittieren.

8. Lichtquellenmodul (110) nach einem der vorhergehenden Ansprüche, wobei die Speichereinrichtung (126) mindestens einen EEPROM umfasst.

9. Lichtquellenmodul (110) nach dem vorhergehenden Anspruch, wobei die Eintrittsfläche (156) einen Oberflächenbereich aufweist, der im Bereich von - 10 % bis +10 % des Oberflächenbereichs der Licht emittierenden Oberfläche der Leuchtdiode (118) liegt.

10. Lichtquellenmodul (110) nach einem der vorhergehenden Ansprüche, wobei die Lichtführungsstange (120) ein Rückteil (158) umfasst, wobei das Rückteil (158) eine Austrittsfläche (160) umfasst, wobei die Austrittsfläche (160) mindestens eine Streuoberfläche (162) umfasst.

11. Analysegerät (112) zum Analysieren von mindestens einer Probe (114), wobei das Analysegerät (112) mindestens ein Lichtquellenmodul (110) nach einem der vorhergehenden Ansprüche umfasst, wobei das Analysegerät (112) ein Eintrittsfenster für durch das Lichtquellenmodul (110) erzeugtes Licht aufweist und das Analysegerät (112) eingerichtet ist, um durch das Lichtquellenmodul (110) emittiertes Licht (122) auf die mindestens eine Probe (114) zu richten.

12. Analysegerät (112) nach dem vorhergehenden Anspruch, wobei das Analysegerät (112) ferner mindestens einen Lichtdetektor (168) umfasst, eingerichtet zum Empfangen von Licht (122), wobei das Licht (122) eines oder mehrere ist von durch die Probe (114) emittiertem Licht (122), durch die Probe (114) übertragenem Licht (122), und durch die Probe (114) reflektiertem Licht (122).

13. Analysesystem, umfassend ein Analysegerät (112) mit einem ersten Lichtquellenmodul, aufweisend eine Nicht-Leuchtdioden-Lichtquelle, die von einer LED unterschiedlich ist, und ein zweites Lichtquellenmodul (110) mit einer Leuchtdioden-Lichtquelle (118), wobei die Lichtcharakteristik des zweiten Lichtquellenmoduls (110) eingerichtet ist zum Nachahmen der Eigenschaften des ersten Lichtquellenmoduls, wobei das zweite Lichtquellenmodul (110) das Lichtquellenmodul (110) nach Anspruch 1 ist.

14. Analysesystem **nach** dem vorhergehenden Anspruch, wobei das erste Lichtquellenmodul (110) durch das zweite Lichtquellenmodul (110) ersetzbar ist.

15. Verfahren zum Modifizieren eines Analysegeräts (112) zum Analysieren von mindestens einer Probe (114), wobei das Analysegerät (112) ein erstes Lichtquellenmodul (110) umfasst, wobei das Verfahren den Schritt des Ersetzens des ersten Lichtquellenmoduls (110) durch ein zweites Lichtquellenmodul (110) umfasst, wobei das zweite Lichtquellenmodul (110) mindestens eine Leuchtdiode (118) und mindestens eine Lichtführungsstange (120) umfasst, eingerichtet zum Leiten und Formen von durch die Leuchtdiode (118) emittiertem Licht (122), wobei das zweite Lichtquellenmodul (110) ferner mindestens eine Speichereinrichtung (126) umfasst, wobei die Speichereinrichtung (126) mindestens eine darin gespeicherte Antriebsparametergruppe (128) zum Steuern des Lichtquellenmoduls (110) aufweist, derart, dass Emissionseigenschaften von durch das erste Lichtquellenmodul (110) bereitgestelltem Licht durch das zweite Lichtquellenmodul (110) nachgeahmt werden, wobei die Lichtführungsstange (120) mindestens einen Vorderteil (154) umfasst, wobei der Vorderteil (154) mindestens eine Eintrittsfläche (156) umfasst, wobei die Geometrie der Eintrittsfläche (156) zu der Geometrie eines Oberflächenbereichs der Licht emittierenden Oberfläche der Leuchtdiode (118) passt.

## Revendications

1. Module source de lumière (110) à utiliser dans un instrument analytique (112) destiné à analyser au moins un échantillon (114), le module source de lumière (110) comprenant au moins une diode électroluminescente (DEL, 118), le module source de lumière (110) comprenant en outre au moins un dispositif de mémoire (126), le dispositif de mémoire (126) ayant, stocké à l'intérieur, au moins un ensemble de paramètres d'excitation (128), destiné à exciter la diode électroluminescente (118) de manière à ce que des propriétés d'émission souhaitées de la lumière (122) délivrée par le module source de lumière (110) soient générées,
**caractérisé en ce que**
le module source de lumière (110) comprend en outre au moins une tige de guidage de la lumière (120) adaptée pour guider et façonner la lumière (122) émise par la diode électroluminescente (118), la tige de guidage de la lumière (120) comprenant au moins une extrémité avant (154), l'extrémité avant (154) comprenant au moins une facette d'entrée (156), la géométrie de la facette d'entrée (156) correspondant à la géométrie d'une zone de surface de la surface d'émission de lumière de la diode électroluminescente (118).

2. Module source de lumière (110) selon une des revendications précédentes, dans lequel la diode électroluminescente (118) comprend au moins une diode électroluminescente blanche (132), de préférence au moins un réseau de diodes électroluminescentes (134).

3. Module source de lumière (110) selon une des revendications précédentes, dans lequel le dispositif de mémoire (126) stocke au moins deux ensembles de paramètres d'excitation différents (128) pour différentes applications du module source de lumière (118).

4. Module source de lumière (110) selon une des revendications précédentes, dans lequel l'ensemble de paramètres d'excitation commande un ou plusieurs des éléments suivants : une puissance de la lumière (122) délivrée par le module source de lumière (110) ; une fréquence de la lumière (122) délivrée par le module source de lumière (110) ; au moins une bande de fréquence de la lumière (122) délivrée par le module source de lumière (110) ; et une distribution d'intensité de la lumière (122) délivrée par le module source de lumière (110) en fonction de la fréquence de la lumière (122).

5. Module source de lumière (110) selon une des revendications précédentes, le module source de lumière (110) comprenant au moins une unité de commande (124).

6. Module source de lumière (110) selon la revendication précédente, dans lequel l'unité de commande (124) commande un programme de synchronisation pour exciter le module source de lumière (110) par segments temporels, chaque segment temporel fournissant une intensité à l'intérieur d'une bande de fréquence adaptée pour l'utilisation du module source de lumière (110).

7. Module source de lumière (110) selon une des deux revendications précédentes, dans lequel l'unité de commande (124) commande un programme de synchronisation pour activer des éléments électroluminescents de la diode électroluminescente (118), la diode électroluminescente (118) comprenant au moins deux éléments électroluminescents, les au moins deux éléments électroluminescents émettant de la lumière de différentes fréquences.

8. Module source de lumière (110) selon une des revendications précédentes, dans lequel le dispositif de mémoire (126) comprend au moins une EEPROM.

9. Module source de lumière (110) selon la revendication précédente, dans lequel la facette d'entrée (156) a une superficie qui se situe dans la gamme de -10 % à +10 % de la superficie de la surface d'émission de lumière de la diode électroluminescente (118).

10. Module source de lumière (110) selon une des revendications précédentes, dans lequel la tige de guidage de la lumière (120) comprend une extrémité arrière (158), l'extrémité arrière (158) comprenant une facette de sortie (160), la facette de sortie (160) comprenant au moins une surface de diffusion (162).

11. Instrument analytique (112) destiné à analyser au moins un échantillon (114), l'instrument analytique (112) comprenant au moins un module source de lumière (110) selon une des revendications précédentes, l'instrument analytique (112) ayant une fenêtre d'entrée pour la lumière générée par le module source de lumière (110), l'instrument analytique (112) étant adapté pour diriger la lumière (122) émise par le module source de lumière (110) sur l'au moins un échantillon (114).

12. Instrument analytique (112) selon la revendication précédente, l'instrument analytique (112) comprenant en outre au moins un détecteur de lumière (168) adapté pour recevoir la lumière (122), la lumière (122) étant la lumière (122) émise par l'échantillon (114), et/ou la lumière (122) transmise à travers l'échantillon (114), et/ou la lumière (122) réfléchie par l'échantillon (114).

13. Système analytique comprenant un instrument analytique (112) avec un premier module source de lumière ayant une source de lumière sans diode électroluminescente qui est différente d'une DEL et un deuxième module source de lumière (110) avec une source de lumière à diode électroluminescente (118), les caractéristiques lumineuses du deuxième module source de lumière (110) étant adaptées pour imiter les caractéristiques du premier module source de lumière, le deuxième module source de lumière (110) étant le module source de lumière (110) selon la revendication 1.

14. Système analytique selon la revendication précédente, dans lequel le premier module source de lumière (110) peut être remplacé par le deuxième module source de lumière (110).

15. Procédé de modification d'un instrument analytique (112) destiné à analyser au moins un échantillon (114), l'instrument analytique (112) comprenant un premier module source de lumière (110), le procédé comprenant l'étape de remplacement du premier module source de lumière (110) par un deuxième module source de lumière (110), le deuxième module source de lumière (110) comprenant au moins une diode électroluminescente (118) et au moins une tige de guidage de la lumière (120) adaptée pour guider et façonner la lumière (122) émise par la diode électroluminescente (118), le deuxième module source de lumière (110) comprenant en outre au moins un dispositif de mémoire (126), le dispositif de mémoire (126) ayant, stocké à l'intérieur, au moins un ensemble de paramètres d'excitation (128), destiné à exciter le deuxième module source de lumière (110) de manière à ce que des propriétés d'émission de la lumière délivrée par le premier module source de lumière (110) soient imitées par le deuxième module source de lumière (110), la tige de guidage de la lumière (120) comprenant au moins une extrémité avant (154), l'extrémité avant (154) comprenant au moins une facette d'entrée (156), la géométrie de la facette d'entrée (156) correspondant à la géométrie d'une zone de surface de la surface d'émission de lumière de la diode électroluminescente (118) .
